# EUROPEAN PATENT APPLICATION

(11) **EP 3 796 706 A1**
(43) Date of publication of application: **24.03.2021**
(21) Application number: 18922465.2
(22) Date of filing: 12.06.2018
(51) Int. Cl.: H04W 28/04

(54) **INFORMATION TRANSMISSION METHOD AND APPARATUS**

(71) Applicant: Huawei Technologies Co., Ltd., Longgang Shenzhen, Guangdong 518129 (CN)
(72) Inventor: ZHENG, Juan, Shenzhen, Guangdong 518129 (CN); LI, Chaojun, Shenzhen, Guangdong 518129 (CN)
(74) Representative: Goddar, Heinz J.
(86) International application number: PCT/CN2018/090898
(87) International publication number: WO 2019/237259

(57) **Abstract**

This application provides an information transmission method. The method is applied to a communications system including a request transmission resource and a feedback transmission resource that both have M overlapping time units in time domain. The method includes: when duration between an initial time unit in the M time units and a time unit that is determined by the terminal device and that is used to transmit an SR is less than preset duration, sending, by the terminal device, both the SR and the feedback information in each of the M time units; or when a time unit that is determined by the terminal device and that is used to transmit an SR is a time unit in the M time units other than an initial time unit in the M time units, sending, by the terminal device, only feedback information in each of the M time units. In this way, detection complexity of a network device can be effectively reduced. The method provided in embodiments may be applied to a communications system, for example, V2X, LTE-V, V2V, the internet of vehicles, MTC, IoT, LTE-M, M2M, and the internet of things.

## Description

### TECHNICAL FIELD

This application relates to the communications field, and more specifically, to an information transmission method and apparatus in the communications field.

### BACKGROUND

During downlink data transmission, a terminal device may send feedback information based on a receiving status of downlink data sent by a network device, where the feedback information is used to indicate that the terminal device successfully receives or fails to receive the downlink data. During uplink data transmission, when having an uplink data transmission requirement, the terminal device may send a scheduling request (scheduling request, SR) to the network device, so that the network device learns that the terminal device has the uplink data transmission requirement, to schedule, for the terminal device, a resource used to transmit uplink data.

In the prior art, when a resource used to transmit the SR (which is denoted as a request transmission resource for ease of differentiation and understanding) and a resource used to transmit the feedback information (which is denoted as a feedback transmission resource for ease of differentiation and understanding) overlap in time domain, if the terminal device needs to send both the SR and the feedback information, to maintain a single-carrier characteristic of the terminal device during the uplink data transmission, the terminal device sends the feedback information on the request transmission resource. In this case, the network device needs to detect not only the feedback information on the feedback transmission resource, but also the feedback information or the SR on the request transmission resource. That is, detection needs to be performed twice.

In addition, in a retransmission mechanism in which the feedback information needs to be repeatedly transmitted, the network device needs to perform combined detection on the repeatedly transmitted feedback information. When the request transmission resource and the feedback transmission resource overlap, a specific occasion on which the terminal device sends the SR is uncertain for the network device. Consequently, in the feedback information retransmission mechanism, detection complexity of the network device increases greatly.

Therefore, a technology needs to be provided to help reduce the detection complexity of the network device.

### SUMMARY

This application provides an information transmission method and apparatus, to effectively reduce detection complexity of a network device.

According to a first aspect, an information transmission method is provided. The information transmission method is applied to a communications system including a request transmission resource and a feedback transmission resource, where the request transmission resource is used to transmit a scheduling request SR, the feedback transmission resource is used to repeatedly transmit feedback information for first downlink data, and the request transmission resource and the feedback transmission resource both include M overlapping time units in time domain, where M is an integer greater than 1; and the method includes:

A terminal device receives the first downlink data.

When duration between an initial time unit in the M time units and a time unit that is determined by the terminal device and that is used to transmit the SR is less than preset duration, in each of the M time units, the terminal device sends the feedback information by using the request transmission resource, or sends both the SR and the feedback information by using the feedback transmission resource.

Alternatively, when a time unit that is determined by the terminal device and that is used to transmit the SR is a time unit in the M time units other than an initial time unit in the M time units, the terminal device sends the feedback information in each of the M time units by using the feedback transmission resource, and skips sending the SR in the M time units by using the request transmission resource.

Therefore, in the information transmission method in this embodiment of this application, when the request transmission resource used to transmit the SR and the feedback transmission resource used to repeatedly transmit the feedback information both include the M time units in time domain, the terminal device sends the feedback information and the SR according to a relationship between the determined time unit used to transmit the SR and the initial time unit in the M time units. In a case, the terminal device repeatedly sends both the feedback information and the SR in the M time units (repeatedly sends the feedback information by using the request transmission resource, or repeatedly sends both the feedback information and the SR by using the feedback transmission resource). In another case, in the M time units, the terminal device sends the feedback information by using only the feedback transmission resource, and skips sending the SR by using the request transmission resource. In this way, if the terminal device may send the feedback information by using the request transmission resource, in the M time units, a network device detects the feedback information by using the request transmission resource, and detects the feedback information by using the feedback transmission resource. There are only two manners of combined detection, and detection is performed only twice. This reduces types of manners of combined detection performed by the network device and detection times, thereby reducing complexity of the combined detection performed by the network device. Alternatively, if the terminal device may send the feedback information and the SR by using the feedback transmission resource, in the M time units, the network device detects the feedback information and the SR by using the feedback transmission resource, and detects the feedback information by using the feedback transmission resource. On the one hand, because time units in which combined detection may be performed are not affected by a specific sending location of the SR, the network device does not need to assume a location of a time unit in which the SR is sent, but may directly combine time units used to send both the feedback information and the SR, that is, perform combined detection on information sent in the M time units, thereby reducing complexity of the combined detection performed by the network device. On the other hand, because it can be ensured that same information is transmitted in the M time units, performance of the feedback information and/or the SR can be ensured as much as possible while the complexity of the combined detection performed by the network device is reduced.

In a possible implementation, that in each of the M time units, the terminal device sends the feedback information by using the request transmission resource, or sends both the SR and the feedback information by using the feedback transmission resource includes:

When the time unit used to transmit the SR is the initial time unit in the M time units, in each of the M time units, the terminal device sends the feedback information by using the request transmission resource, or sends both the SR and the feedback information by using the feedback transmission resource.

In a possible implementation, the method further includes:

When the time unit used to transmit the SR is the time unit in the M time units other than the initial time unit in the M time units, the terminal device sends the SR after the M time units.

In a possible implementation, M is a pre-configured quantity of retransmissions for repeatedly transmitting the feedback information.

In a possible implementation, that the terminal device sends the SR after the M time units includes:

The terminal device sends the SR in the first time unit that is after the M time units.

According to a second aspect, an information transmission method is provided. The information transmission method is applied to a communications system including a request transmission resource and a feedback transmission resource, where the request transmission resource is used to repeatedly transmit a scheduling request SR, the feedback transmission resource is used to repeatedly transmit feedback information for first downlink data, and the request transmission resource and the feedback transmission resource both include M overlapping time units in time domain, where M is an integer greater than 1; and the method includes:

A terminal device receives the first downlink data.

The terminal device sends the feedback information in each of the M time units by using the feedback transmission resource, and the terminal device repeatedly transmits the SR from an initial time unit in K determined time units used to repeatedly transmit the SR, and stops transmitting the SR from an initial time unit in the M time units, where K is a pre-configured quantity of retransmissions for repeatedly transmitting the SR, and K is an integer greater than 1, where
the initial time unit in the K time units is located before the M time units, and a last time unit in the K time units is in the M time units.

Therefore, according to the information transmission method in this embodiment of this application, when the request transmission resource used to repeatedly transmit the SR and the feedback transmission resource used to repeatedly transmit the feedback information both include the M time units in time domain, if the terminal device has an uplink transmission requirement, if the initial time unit in the K determined time units used to repeatedly transmit the SR is located before the M time units, and if the last time unit in the K time units is in the M time units, the terminal device sends the feedback information in the M time units by using only the feedback transmission resource. The terminal device repeatedly sends the SR in only a time unit that is in the K time units and that is before the M time units, and skips sending the SR in remaining time units that are in the K time units. In this way, a network device determines that the terminal device sends only the feedback information in the M time units, and may detect the feedback information by using only the feedback transmission resource, thereby reducing detection complexity of the network device. In addition, a delay in sending the SR by the terminal device is not affected.

In a possible implementation, the last time unit in the K time units is a time unit in the M time units other than a last time unit in the M time units.

In a possible implementation, the feedback transmission resource includes P time units, where the P time units include the M time units, P is a pre-configured quantity of retransmissions for repeatedly transmitting the feedback information, and P is greater than M.

In a possible implementation, M is a pre-configured quantity of retransmissions for repeatedly transmitting the feedback information.

According to a third aspect, an information transmission method is provided. The information transmission method is applied to a communications system including a request transmission resource and a feedback transmission resource, where the request transmission resource is used to repeatedly transmit a scheduling request SR, the feedback transmission resource is used to repeatedly transmit feedback information for first downlink data, and the request transmission resource and the feedback transmission resource both include M overlapping time units in time domain, where M is an integer greater than 1; and the method includes:

A terminal device receives the first downlink data.

In each of the M time units, the terminal device sends the feedback information by using the request transmission resource, or sends both the SR and the feedback information by using the feedback transmission resource, where
an initial time unit in K time units that are determined by the terminal device and that are used to repeatedly transmit the SR is not later than an initial time unit in the M time units, a last time unit in the K time units is in the M time units, K is a pre-configured quantity of retransmissions for repeatedly transmitting the SR, and K is an integer greater than 1.

Therefore, according to the information transmission method in this embodiment of this application, when the request transmission resource used to repeatedly transmit the SR and the feedback transmission resource used to repeatedly transmit the feedback information both include the M time units in time domain, if the terminal device has an uplink transmission requirement, and if the initial time unit in the K determined time units used to repeatedly transmit the SR is not later than an initial time unit in the M time units, in the M time units, the terminal device repeatedly sends both the feedback information and the SR, to be specific, repeatedly sends the feedback information by using the request transmission resource, or repeatedly sends both the feedback information and the SR by using the feedback transmission resource. In this way, a network device determines that the terminal device may send both the feedback information and the SR in the M time units. If the terminal device sends the feedback information by using the request transmission resource, in the M time units, the network device detects the feedback information by using the request transmission resource, and detects the feedback information by using the feedback transmission resource. There are only two manners of combined detection, and the detection is performed only twice. This reduces types of manners of combined detection performed by the network device and detection times, thereby reducing complexity of the combined detection performed by the network device. If the terminal device sends the feedback information and the SR by using the feedback transmission resource, in the M time units, the network device detects the feedback information and the SR by using the feedback transmission resource, and detects the feedback information by using the feedback transmission resource. On the one hand, because time units in which the combined detection may be performed are not affected by a specific sending location of the SR, the network device does not need to assume a location of a time unit in which the SR is sent, but may directly combine time units used to send both the feedback information and the SR, that is, perform the combined detection on information sent in the M time units, thereby reducing the complexity of the combined detection performed by the network device. On the other hand, because it can be ensured that same information is transmitted in the M time units, performance of the feedback information and/or the SR can be ensured as much as possible while the complexity of the combined detection performed by the network device is reduced.

In a possible implementation, the last time unit in the K time units is a time unit in the M time units other than a last time unit in the M time units.

In a possible implementation, the initial time unit in the K time units is the initial time unit in the M time units.

In a possible implementation, M is a pre-configured quantity of retransmissions for repeatedly transmitting the feedback information.

According to a fourth aspect, an information transmission method is provided. The information transmission method is applied to a communications system including a request transmission resource and a feedback transmission resource, where the request transmission resource is used to transmit a scheduling request SR or repeatedly transmit a scheduling request SR, the feedback transmission resource is used to repeatedly transmit feedback information for first downlink data, and the feedback transmission resource and the request transmission resource both include M overlapping time units in time domain, where M is an integer greater than 1; and the method includes:

A network device sends the first downlink data.

In the M time units, the network device detects the feedback information by using the request transmission resource, and
detects the feedback information by using the feedback transmission resource.

Alternatively, in the M time units, the network device detects the feedback information and the SR by using the feedback transmission resource, and detects the feedback information by using the feedback transmission resource.

According to a fifth aspect, an information transmission apparatus is provided. The apparatus may be configured to perform an operation of the terminal device in any one of the first aspect or the possible implementations of the first aspect. Specifically, the apparatus may include modules or units configured to perform operations of the terminal device in any one of the first aspect or the possible implementations of the first aspect.

According to a sixth aspect, an information transmission apparatus is provided. The apparatus may be configured to perform an operation of the terminal device in any one of the second aspect or the possible implementations of the second aspect. Specifically, the apparatus may include modules or units configured to perform operations of the terminal device in any one of the second aspect or the possible implementations of the second aspect.

According to a seventh aspect, an information transmission apparatus is provided. The apparatus may be configured to perform an operation of the terminal device in any one of the third aspect or the possible implementations of the third aspect. Specifically, the apparatus may include modules or units configured to perform operations of the terminal device in any one of the third aspect or the possible implementations of the third aspect.

According to an eighth aspect, an information transmission apparatus is provided. The apparatus may be configured to perform an operation of the network device in any one of the fourth aspect or the possible implementations of the fourth aspect. Specifically, the apparatus may include modules or units configured to perform operations of the network device in any one of the fourth aspect or the possible implementations of the fourth aspect.

According to a ninth aspect, a terminal device is provided. The terminal device includes a processor, a transceiver, and a memory. The processor, the transceiver, and the memory communicate with each other through an internal connection path. The memory is configured to store an instruction, and the processor is configured to execute the instruction stored in the memory. When the processor executes the instruction stored in the memory, the execution enables the terminal device to perform the method in any one of the first aspect or the possible implementations of the first aspect, or the execution enables the terminal device to implement the apparatus provided in the fifth aspect.

According to a tenth aspect, a terminal device is provided. The terminal device includes a processor, a transceiver, and a memory. The processor, the transceiver, and the memory communicate with each other through an internal connection path. The memory is configured to store an instruction, and the processor is configured to execute the instruction stored in the memory. When the processor executes the instruction stored in the memory, the execution enables the terminal device to perform the method in any one of the second aspect or the possible implementations of the second aspect, or the execution enables the terminal device to implement the apparatus provided in the sixth aspect.

According to an eleventh aspect, a terminal device is provided. The terminal device includes a processor, a transceiver, and a memory. The processor, the transceiver, and the memory communicate with each other through an internal connection path. The memory is configured to store an instruction, and the processor is configured to execute the instruction stored in the memory. When the processor executes the instruction stored in the memory, the execution enables the terminal device to perform the method in any one of the third aspect or the possible implementations of the third aspect, or the execution enables the terminal device to implement the apparatus provided in the seventh aspect.

According to a twelfth aspect, a network device is provided. The network device includes a processor, a transceiver, and a memory. The processor, the transceiver, and the memory communicate with each other through an internal connection path. The memory is configured to store an instruction, and the processor is configured to execute the instruction stored in the memory. When the processor executes the instruction stored in the memory, the execution enables the network device to perform the method in any one of the fourth aspect or the possible implementations of the fourth aspect, or the execution enables the network device to implement the apparatus provided in the eighth aspect.

According to a thirteenth aspect, a chip system is provided. The chip system includes a memory and a processor, the memory is configured to store a computer program, and the processor is configured to: invoke the computer program from the memory and run the computer program, so that a communications device in which the chip system is installed performs the method in any one of the first aspect to the fourth aspect and the possible implementations of the first aspect to the fourth aspect.

According to a fourteenth aspect, a computer program product is provided, and the computer program product includes computer program code. When the computer program code is run by a communications unit and a processing unit or by a transceiver and a processor of a communications device (such as a network device or a terminal device), the communications device is enabled to perform the method in any one of the first aspect to the fourth aspect and the possible implementations of the first aspect to the fourth aspect.

According to a fifteenth aspect, a computer-readable storage medium is provided. The computer-readable storage medium stores a program, and the program enables a communications device (such as a network device or a terminal device) to perform the method in the first aspect to the fourth aspect and the possible implementations of the first aspect to the fourth aspect.

According to a sixteenth aspect, a computer program is provided. When the computer program is executed on a computer, the computer is enabled to perform the method in any one of the first aspect to the fourth aspect and the possible implementations of the first aspect to the fourth aspect.

### BRIEF DESCRIPTION OF DRAWINGS

FIG. 1 is a schematic diagram of repeatedly transmitting feedback information according to an embodiment of this application;
FIG. 2 is a schematic diagram of a feedback transmission resource and a request transmission resource according to an embodiment of this application;
FIG. 3 is a schematic interaction diagram of an information transmission method according to an embodiment of this application;
FIG. 4 to FIG. 9 each are a schematic diagram of a feedback information transmission resource and a request transmission resource according to an embodiment of this application;
FIG. 10 is a schematic interaction diagram of an information transmission method according to another embodiment of this application;
FIG. 11 is a schematic diagram of a feedback transmission resource and a request transmission resource according to another embodiment of this application;
FIG. 12 is a schematic interaction diagram of an information transmission method according to still another embodiment of this application;
FIG. 13 to FIG. 21 each are a schematic diagram of a feedback transmission resource and a request transmission resource according to still another embodiment of this application; and
FIG. 22 to FIG. 25 each show an information transmission apparatus according to an embodiment of this application.

### DESCRIPTION OF EMBODIMENTS

The following describes the technical solutions of this application with reference to the accompanying drawings.

The technical solutions of embodiments of this application may be applied to various communications systems such as a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

A terminal device in the embodiments of this application may be user equipment, an access terminal, a subscriber unit, a subscriber station, a mobile station, a mobile station, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a future 5G network, or a terminal device in a future evolved public land mobile communication network (public land mobile network, PLMN). This is not limited in the embodiments of this application.

A network device in the embodiments of this application may be a device configured to communicate with the terminal device. The network device may be a base station (base transceiver station, BTS) in a GSM system or code division multiple access CDMA, a base station (NodeB, NB) in a WCDMA system, an evolved NodeB (evolutional NodeB, eNB or eNodeB) in an LTE system, or a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, or the like. This is not limited in the embodiments of this application.

For ease of understanding, the following briefly describes feedback information and an SR in the embodiments of this application.

### Feedback information

During downlink data transmission, a data transmission mode based on hybrid automatic repeat request (HARQ hybrid automatic repeat request, HARQ-ACK) feedback may be used.

Specifically, the network device sends downlink data in an n^{th} time unit. After receiving the downlink data, the terminal device demodulates the downlink data, and determines whether the terminal device successfully receives the downlink data. If the terminal device successfully receives the downlink data, feedback information sent by the terminal device to the network device in an (n+M)^{th} time unit is an acknowledgment (acknowledgment, ACK). If the terminal device fails to receive the downlink data, feedback information sent by the terminal device to the network device in the (n+M)^{th} time unit is a negative acknowledgment (negative acknowledgment, NACK).

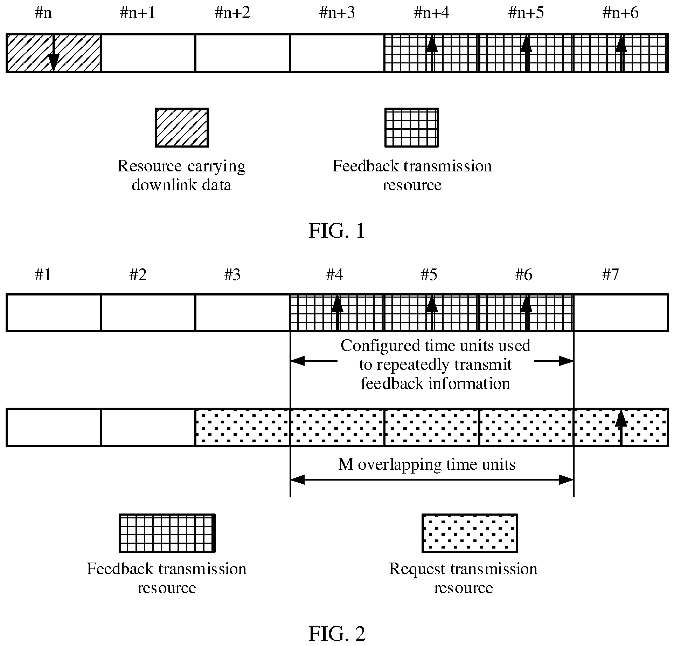

In addition, for the data transmission mode based on the HARQ-ACK feedback, to ensure that data transmission reliability can reach, for example, 99.999% or 99.99% with a given latency, the terminal device may repeatedly transmit the feedback information. FIG. 1 is a schematic diagram of repeatedly transmitting feedback information. As shown in FIG. 1, it is assumed that the network device sends the downlink data in a time unit #n. If successfully receiving the downlink data, the terminal device may continuously send the ACK for three times from a time unit #n+4, to be specific, the terminal device may send the ACK in the time unit #n+4, a time unit #n+5, and a time unit #n+6. If failing to receive the downlink data, the terminal device may send the NACK in the time unit #n+4, the time unit #n+5, and the time unit #n+6. Correspondingly, the network device may perform combined detection on feedback information that is sent by the terminal device in the time unit #n+4, the time unit #n+5, and the time unit #n+6.

### SR

During uplink data transmission, when having an uplink service transmission requirement, the terminal device needs to first send a scheduling request (scheduling request, SR) to the network device, to notify the network device that the terminal device has the uplink data transmission requirement. The network device learns that the terminal device has the uplink data transmission requirement, to schedule, for the terminal device, a resource used to transmit uplink data.

Generally, the SR is carried on a physical uplink control channel (physical uplink control channel, PUCCH), and a resource used to transmit the SR may be predefined (pre-determined), or may be pre-configured (pre-configured), or may be notified by the network device by using dynamic signaling.

For example, for a time domain resource for transmitting the SR, if the time domain resource periodically appears, a periodicity of the time domain resource and a specific location of the time domain resource in one periodicity may be determined by the network device by using a radio resource control (radio resource control, RRC) signaling configuration. Alternatively, the time domain resource may be determined by using downlink control information (downlink control information, DCI), where the DCI may be sent through a physical downlink control channel (physical downlink control channel, PDCCH) or an enhanced physical downlink control channel (enhanced physical downlink control channel, EPDCCH).

In addition, to improve transmission reliability of the SR, the SR may also be repeatedly transmitted.

In the embodiments of this application, for ease of description, the resource used to transmit the SR is denoted as a request transmission resource, and a resource used to transmit feedback information is denoted as a feedback transmission resource. The request transmission resource includes a time domain resource, a frequency domain resource, and a sequence resource, and the feedback transmission resource also includes a time domain resource, a frequency domain resource, and a sequence resource.

To meet reliability of the downlink data transmission and the uplink data transmission, in a scenario, the terminal device may have a requirement for transmitting both the SR and the feedback information. To be specific, on a same time domain resource, the terminal device needs to send not only the SR but also the feedback information.

In the foregoing scenario, to meet a single-carrier characteristic of the terminal device during data transmission, in the prior art, during single transmission of the SR and single transmission of the feedback information, the terminal device may send both the SR and the feedback information on a time domain resource of the request transmission resource and a time domain resource of the feedback transmission resource that overlap. There may be two specific transmission modes. The terminal device may send the feedback information by using the request transmission resource. To be specific, the terminal device sends, on the time domain resource of the request transmission resource and the time domain resource of the feedback transmission resource that overlap, the feedback information by using a frequency domain resource and/or a sequence resource of the request transmission resource. Alternatively, the terminal device sends the feedback information and the SR by using the feedback transmission resource. To be specific, the terminal device sends, on the time domain resource of the request transmission resource and the time domain resource of the feedback transmission resource that overlap, the feedback information and the SR by using a frequency domain resource and/or a sequence resource of the feedback transmission resource.

The following separately describes the transmission mode in which the terminal device sends the feedback information by using the request transmission resource and the transmission mode in which the terminal device sends the feedback information and the SR by using the feedback transmission resource. In addition, for ease of description, the transmission mode in which the terminal device sends the feedback information by using the request transmission resource is denoted as a transmission mode #A, and the transmission mode in which the terminal device sends the feedback information and the SR by using the feedback transmission resource is denoted as a transmission mode #B.

Transmission mode #A: The terminal device sends the feedback information by using the request transmission resource

In the transmission mode, the feedback information may be transmitted in a sequence-based transmission mode. For example, in the LTE system, the feedback information is transmitted in an uplink control channel format 1a (PUCCH format 1a) or an uplink control channel format 1b (PUCCH format 1b). When needing to send both the feedback information and the SR, the terminal device sends the feedback information by using the request transmission resource.

This is because the network device may determine whether there is energy on the request transmission resource, to determine whether the terminal device sends the SR. Therefore, when sending both the feedback information and the SR, the terminal device may send the feedback information on the request transmission resource. Reasons are as follows: On the one hand, the feedback information is sent on the request transmission resource, and there is energy on the request transmission resource. In this way, the network device may determine that the terminal device sends the SR. On the other hand, the network device may further detect the feedback information on the request transmission resource. To be specific, the network device may detect, by using the sequence resource corresponding to the feedback information, data received on the request transmission resource, to determine whether the terminal device feeds back the ACK or the NACK.

In conclusion, although the terminal device sends the feedback information by using only the request transmission resource, the network device considers that the terminal device sends the SR provided that the energy can be detected on the request transmission resource. Therefore, that the terminal device sends the feedback information by using the request transmission resource may be understood as follows: The terminal device sends the feedback information and the SR by using the request transmission resource.

The feedback transmission resource is indicated by the network device, and the terminal device sends the feedback information on the feedback transmission resource indicated by the network device. Therefore, the network device determines a feedback transmission resource or feedback transmission resources on which the terminal device sends the feedback information. The network device determines a time domain location of a time domain resource on which the terminal device sends the feedback information. The request transmission resource is generally pre-configured by the network device. A time at which the terminal device sends the SR is an implementation problem of the terminal device. Although the network device determines time domain resources on which the SR may be sent, the network device cannot determine a specific time domain resource on which the SR is actually sent.

Therefore, if the network device determines that the time domain resource on which the feedback information is sent overlaps a pre-configured time domain resource on which the SR is sent, but does not determine whether the terminal device sends the SR on the overlapping time domain resource, to correctly detect the SR and the feedback information, the network device needs to detect not only the feedback information on the feedback transmission resource, but also the feedback information on the request transmission resource.

That is, when the time domain resource of the feedback transmission resource overlaps the time domain resource of the request transmission resource, the network device needs to perform detection twice.

Transmission mode #B: The terminal device sends the feedback information and the SR by using the feedback transmission resource

In the transmission mode, the feedback information may be transmitted in an information bit-based transmission mode. That is, the feedback information is fed back by using explicit bit information. For example, in the LTE system, the feedback information is transmitted in an uplink control channel format 3 (PUCCH format 3). When sending both the feedback information and the SR, the terminal device sends the feedback information and the SR by using the feedback transmission resource. Both the SR and the feedback information may be explicitly represented in the feedback transmission resource by using bits (bit). For example, for the SR, "1" indicates that the terminal device sends the SR, and "0" indicates that the terminal device skips sending the SR. For the feedback information, "1" may be used to indicate the ACK, and "0" may be used to indicate the "NACK" in one codeword included in each downlink data transmission.

In the prior art, to ensure transmission reliability, the feedback information may be repeatedly transmitted. When the time domain resource of the feedback transmission resource used to repeatedly transmit the feedback information overlaps the time domain resource of the request transmission resource used to transmit the SR, the terminal device may send the SR at any time on the overlapping time domain resource. For the network device, this increases detection complexity of the network device.

FIG. 2 is a schematic diagram of a feedback transmission resource and a request transmission resource according to an embodiment of this application. As shown in FIG. 2, it is assumed that an SR is transmitted for a single time. The feedback transmission resource includes a time unit #4 to a time unit #6, the request transmission resource includes a time unit #3 to a time unit #7, and overlapping time units are the time unit #4, the time unit #5, and the time unit #6. A network device does not learn of whether and a time unit in which a terminal device sends the SR. Therefore, there are four assumptions for the network device: The terminal device sends the SR in any one of the time unit #4, the time unit #5, and the time unit #6, and the terminal device skips sending the SR.

In a transmission mode in which the terminal device sends feedback information by using the request transmission resource, the network device considers four manners of combined detection: [the request transmission resource, the feedback transmission resource, the feedback transmission resource], [the feedback transmission resource, the request transmission resource, the feedback transmission resource], [the feedback transmission resource, the feedback transmission resource, the request transmission resource], and [the feedback transmission resource, the feedback transmission resource, the feedback transmission resource]. X/Y/Z in [X, Y, Z] correspond to the time unit #4, the time unit #5, and the time unit #6, respectively. A manner of combined detection: [the request transmission resource, the feedback transmission resource, the feedback transmission resource] is used as an example. The network device assumes that the terminal device sends a HARQ-ACK in the time unit #4 by using the request transmission resource, sends a HARQ-ACK in the time unit #5 and the time unit #6 by using the feedback transmission resource, and performs combined detection, based on the assumption information, on the HARQ-ACKs transmitted in different time units (the time unit #4 to the time unit #6).

In this way, on the one hand, in the four different manners of combined detection, a quantity of times of detection performed by the network device is increased. On the other hand, when the network device assumes that the terminal device sends the SR, in manners of combined detection, combined detection is performed on different content, and detection complexity of the network device is also increased.

In a transmission mode in which the terminal device sends feedback information by using the feedback transmission resource, assuming that " 1" indicates that the terminal device sends the SR, "0" indicates that the terminal device skips sending the SR, "1" indicates an ACK, and "0" indicates a NACK, the network device also considers a plurality of manners of combined detection. Manners of differential combined detection are used as examples. If the feedback information is the NACK, manners of combined detection include: [**1 0**, 0 0, 0 0], [0 0, **1 0**, 0 0], [0 0, 0 0, **1 0**], and [0 0, 0 0, 0 0]. If the feedback information is the ACK, manners of combined detection include: [**1 1**, 0 1, 0 1], [0 1, **1 1**, 0 1], [0 1, 0 1, **1 1**], and [0 1, 0 1, 0 1]. X/Y/Z in [X, Y, Z] correspond to the time unit #4, the time unit #5, and the time unit #6, respectively. One time unit corresponds to two bits. A value of the first bit is used to indicate whether the terminal device sends the SR, a value of the second bit is used to indicate that the feedback information is the ACK or the NACK, and a group of bits in black and bold corresponds to a time unit in which the terminal device may send the SR and that is assumed by the network device. On the one hand, because there is always one of the three time units that includes different indication content of information bits, performance of the combined detection performed by the network device is affected. On the other hand, to ensure the performance of the combined detection as much as possible, the network device may perform, based on locations of the time units in which the SR is sent, the differential combined detection on indication content of information bits sent in different time units. Because the locations of the time units in which the SR is sent are different, the indication content of the information bits corresponding to the differential combined detection is different. Consequently, the detection complexity of the network device is increased.

The foregoing example is merely used if the SR is transmitted for a single time. If the SR may alternatively be repeatedly transmitted, complexity of combined detection performed by the network device on the feedback information and/or the SR is further increased.

In conclusion, when the time domain resource of the request transmission resource overlaps the time domain resource of the feedback transmission resource, the detection complexity of the network device is increased according to a transmission mechanism for sending the SR and the feedback information in the prior art.

To resolve the foregoing problem, the embodiments of this application provide an information transmission method. When a request transmission resource and a feedback transmission resource both include overlapping time domain units in time domain, a terminal device sends both feedback information and an SR or sends only feedback information in the overlapping time domain units according to a preset rule. This can reduce types of manners of combined detection performed by a network device. In addition, if the terminal device sends both the feedback information and the SR in a transmission mode #A, combined detection is performed on same content each time. Therefore, complexity of the combined detection performed by the network device is reduced, so that the foregoing problem can be effectively resolved.

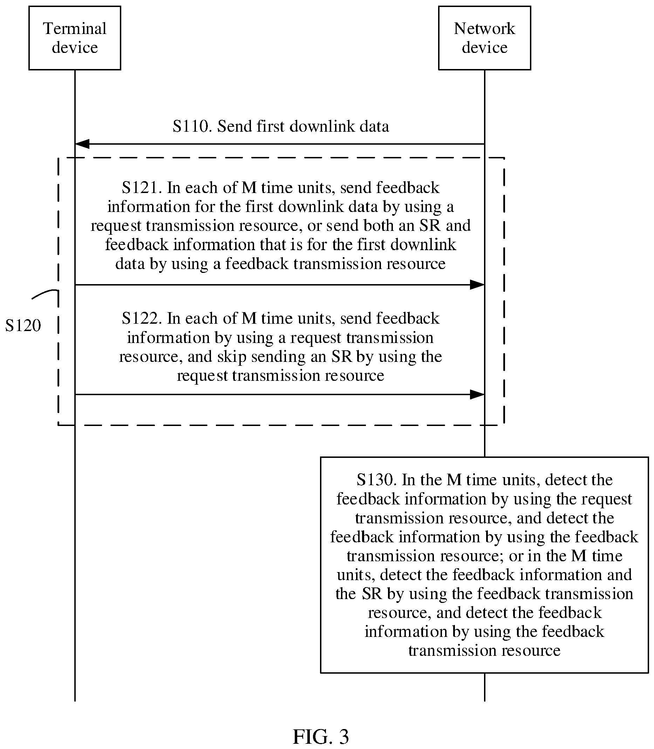

The following describes in detail the information transmission method according to the embodiments of this application with reference to FIG. 3 to FIG. 21.

FIG. 3 is a schematic interaction diagram of an information transmission method 100 according to an embodiment of this application.

This embodiment of this application is applied to a communications system including a request transmission resource and a feedback transmission resource. The request transmission resource is used to transmit a scheduling request SR, and the feedback transmission resource is used to repeatedly transmit feedback information for first downlink data. The feedback transmission resource includes a time domain resource, a frequency domain resource, and a sequence resource, and the request transmission resource includes a time domain resource, a frequency domain resource, and a sequence resource. The frequency domain resource of the feedback transmission resource is different from the frequency domain resource of the request transmission resource, or the sequence resource of the feedback transmission resource is different from the sequence resource of the request transmission resource.

The sequence resource includes at least one of the following: a base sequence used to transmit information (for example, the feedback information or the SR in this embodiment of this application), a cyclic shift (cyclic shift, CS), or an orthogonal complementary code (orthogonal complementary code, OCC). The OCC may be an orthogonal complementary code used in time (which, for example, may be referred to as a time-domain OCC for short) or an orthogonal complementary code used in frequency (which, for example, may be referred to as a frequency-domain OCC for short), or may be in another form. This is not specifically limited. The feedback transmission resource may be configured and implemented by the network device. A specific configuration and implementation means may include at least one of the following: higher layer signaling such as radio resource control (radio resource control, RRC) signaling, media access control (media access control, MAC) signaling, and physical layer signaling. The physical layer signaling may be carried in a notification manner on a physical control channel. Alternatively, the feedback transmission resource may be predefined. A same description is provided for the request transmission resource, and details are not described again.

For the time domain resource, the feedback transmission resource includes P time units, the request transmission resource includes Q time units, and the feedback transmission resource and the request transmission resource both include M overlapping time units in time domain. To be specific, the M time units are an intersection set of the P time units and the Q time units. M is an integer greater than 1, and P is a pre-configured quantity of retransmissions for repeatedly transmitting the feedback information.

Optionally, the P time units are consecutive in time, and the Q time units are also consecutive in time.

In this embodiment of this application, M may be equal to P, or M may be less than P. If M is equal to P, it indicates that the time units included in the request transmission resource include at least all time units used to repeatedly transmit the feedback information. If M is less than P, it indicates that the time units included in the request transmission resource partially overlap all time units used to repeatedly transmit the feedback information.

It should be noted that, unless otherwise specified, the request transmission resource in the method 100 is used to transmit the SR for a single time.

Based on the foregoing scenario, the following describes each step of the method 100 in detail.

In step S110, the network device sends the first downlink data.

Specifically, before the P time units corresponding to the feedback transmission resource, the network device sends the first downlink data to the terminal device.

The terminal device may repeatedly send the feedback information from the first time unit of the feedback transmission resource based on a receiving status of the first downlink data.

In step S120, the terminal device may perform step S121 based on an actual situation. To be specific, the terminal device sends both the feedback information and the SR in each of the M time units. In other words, the terminal device repeatedly sends both the feedback information and the SR in the M time units. Alternatively, the terminal device may perform step S122 based on an actual situation. To be specific, in the M time units, the terminal device repeatedly sends only the feedback information and skips sending the SR.

The following separately describes cases in which the terminal device performs step S121 and step S122.

### Step S121

In step S121, when duration between an initial time unit in the M time units and a time unit that is determined by the terminal device and that is used to transmit the SR is less than preset duration, in each of the M time units, the terminal device sends the feedback information by using the request transmission resource, or sends both the SR and the feedback information by using the feedback transmission resource.

It should be noted that the terminal device performs the foregoing operation only when the duration between the initial time unit in the M time units and the time unit that is determined by the terminal device and that is used to transmit the SR is less than the preset duration. In this way, complexity of detecting the feedback information by the network device can be reduced, and a quantity of SR transmissions can be reduced as much as possible, thereby ensuring performance of multi-user multiplex transmission of SRs on the request transmission resource.

In addition, it should also be understood that the time unit used to transmit the SR is located before the initial time unit in the M time units. Therefore, the duration between the initial time unit in the M time units and the time unit used to transmit the SR may be duration that is after the time unit used to transmit the SR and before the initial time unit in the M time units, or duration that is between a start boundary of the time unit used to transmit the SR and a start boundary of the initial time unit in the M time units.

Specifically, if the terminal device has an uplink transmission requirement before the M time units, the terminal device may determine the time unit for transmitting the SR. If the duration between the initial time unit in the M time units and the time unit that is determined by the terminal device and in which the SR can be transmitted is less than the preset duration, to reduce complexity of combined detection performed by the network device, the terminal device may send both the feedback information and the SR in each of the M time units. In other words, the terminal device repeatedly sends both the feedback information and the SR in the M time units.

A transmission mode for sending both the feedback information and the SR may be the transmission mode #A and the transmission mode #B described above. The transmission mode #A herein is sending the feedback information by using the request transmission resource, and is actually equivalent to sending both the feedback information and the SR by using the request transmission resource. For a specific implementation, refer to the foregoing descriptions of the two transmission modes. Details are not described herein again.

It should be noted that, that the terminal device sends the feedback information in each of the M time units by using the request transmission resource may be understood as the following: The terminal device sends the feedback information in each of the M time units by using the frequency domain resource and/or the sequence resource of the request transmission resource. Similarly, that the terminal device sends the feedback information and the SR in each of the M time units by using the feedback transmission resource may be understood as the following: The terminal device sends the feedback information and the SR in each of the M time unit by using the frequency domain resource and/or the sequence resource of the feedback transmission resource.

In this embodiment of this application, the preset duration may be predefined, or may be notified by the network device by using dynamic signaling, or may be notified by the network device by using higher layer signaling or MAC signaling. This is not limited herein.

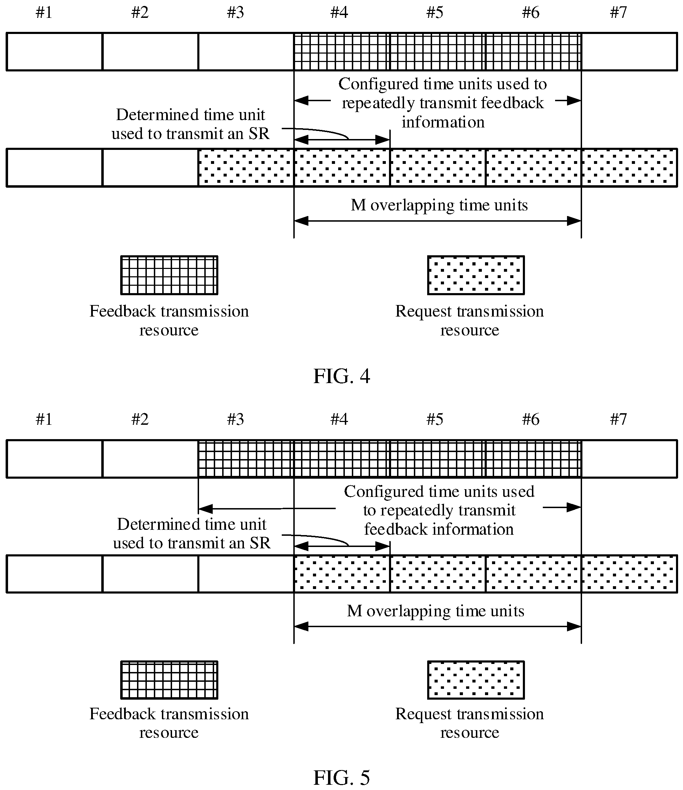

In the following, with reference to FIG. 4 to FIG. 7, a relationship between the time unit used to transmit the SR and the initial time unit in the M time units and a relationship between M and the pre-configured quantity P of retransmissions for repeatedly transmitting the feedback information are separately used to describe a process in which the terminal device sends both the feedback information and the SR in the M time units.

It should be noted that in the embodiments of this application, M and P may be pre-configured, or may be notified by the network device by using signaling such as the higher layer signaling, the MAC signaling, or the physical layer signaling. This is not specifically limited.

In a possible implementation, that in each of the M time units, the terminal device sends the feedback information by using the request transmission resource, or sends both the SR and the feedback information by using the feedback transmission resource includes:

When the time unit used to transmit the SR is the initial time unit in the M time units, in each of the M time units, the terminal device sends the feedback information by using the request transmission resource, or sends both the SR and the feedback information by using the feedback transmission resource.

In this case, the preset duration is 0.

Specifically, if the terminal device has the uplink requirement, and the determined time unit used to transmit the SR is the initial time unit in the M time units, although a configuration is that the SR is transmitted for a single time, to reduce the complexity of the combined detection performed by the network device, the terminal device may not only normally and repeatedly send the feedback information in the M time units, but also repeatedly send the SR in the M time units. That is, the terminal device may repeatedly send both the feedback information and the SR in the M time units, to be specific, send both the feedback information and the SR in the transmission mode #A or the transmission mode #B.

FIG. 4 is a schematic diagram of a feedback transmission resource and a request transmission resource according to an embodiment of this application. As shown in FIG. 4, M=3=P, the M time units include a time unit #4, a time unit #5, and a time unit #6, and the time unit that is determined by the terminal device and that is used to transmit the SR is the time unit #4. In this case, in the time unit #4, the time unit #5, and the time unit #6, the terminal device repeatedly sends the feedback information by using the request transmission resource, or repeatedly sends the feedback information and the SR by using the feedback transmission resource. By contrast, in the prior art, only in the time unit #4, the terminal device sends the feedback information by using the request transmission resource, or sends the feedback information and the SR by using the feedback transmission resource. In the time unit #5 and the time unit #6, the terminal device continues repeatedly sending the feedback information by using the feedback transmission resource, and skips sending the SR.

FIG. 5 is another schematic diagram of a feedback transmission resource and a request transmission resource according to an embodiment of this application. As shown in FIG. 5, M=3, P=4, the P time units include a time unit #3, a time unit #4, a time unit #5, and a time unit #6, the M time units include the time unit #4, the time unit #5, and the time unit #6, and the time unit that is determined by the terminal device and that is used to transmit the SR is the time unit #4. In this case, the terminal device sends the feedback information in the time unit #3 by using the feedback transmission resource. In the time unit #4, the time unit #5, and the time unit #6, the terminal device repeatedly sends the feedback information by using the request transmission resource, or repeatedly sends the feedback information and the SR by using the feedback transmission resource.

In another possible implementation, when the time unit used to transmit the SR is before the M time units, in each of the M time units, the terminal device sends the feedback information by using the request transmission resource, or sends both the SR and the feedback information by using the feedback transmission resource.

To be specific, provided that duration between the time unit used to transmit the SR and the initial time unit in the M time units is within a preset duration range, although the terminal device has the uplink transmission requirement before the M time units, and the determined time unit used to transmit the SR is before the M time units, the terminal device may not only normally and repeatedly send the feedback information in the M time units, but also repeatedly send the SR in the M time units. That is, the terminal device may repeatedly send both the feedback information and the SR in the M time units. In the determined time unit used to transmit the SR and a time unit between the determined time unit used to transmit the SR and the initial time unit in the M time units, the terminal device may send the SR by using the request transmission resource or may not send the SR. This is not limited in this embodiment of this application.

In this way, transmission reliability of the SR can be improved when a transmission delay in the SR is not greatly affected.

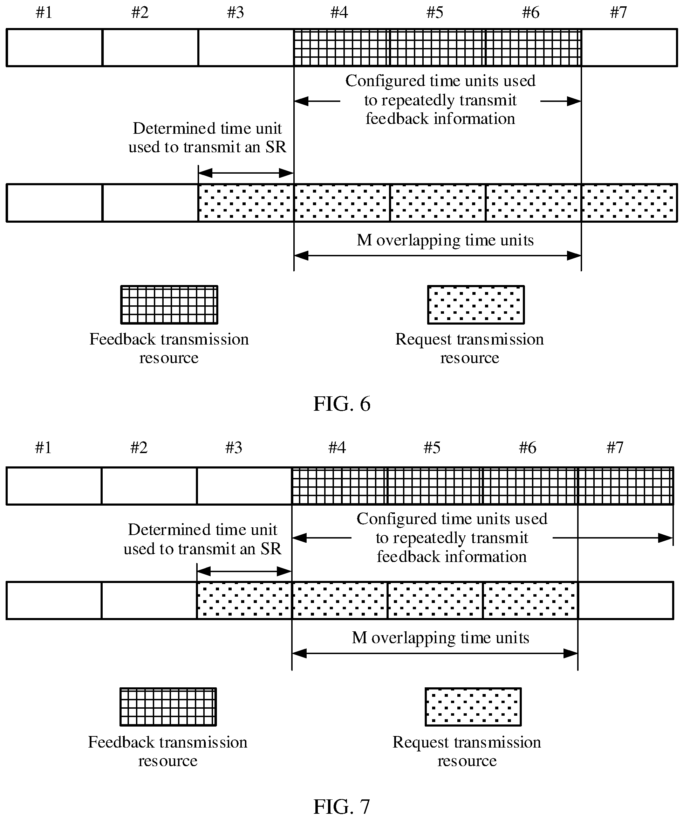

FIG. 6 is another schematic diagram of a feedback transmission resource and a request transmission resource according to an embodiment of this application. As shown in FIG. 6, M=3=P, the M time units include a time unit #4, a time unit #5, and a time unit #6, and the time unit that is determined by the terminal device and that is used to transmit the SR is a time unit #3. In this case, in the time unit #4, the time unit #5, and the time unit #6, the terminal device repeatedly sends the feedback information by using the request transmission resource, or repeatedly sends the feedback information and the SR by using the feedback transmission resource. In addition, in the time unit #3, the terminal device may also send the SR by using the request transmission resource, or may not send the SR.

FIG. 7 is another schematic diagram of a feedback transmission resource and a request transmission resource according to an embodiment of this application. As shown in FIG. 7, M=3, P=4, the P time units include a time unit #4, a time unit #5, a time unit #6, and a time unit #7, the M time units include the time unit #4, the time unit #5, and the time unit #6, and the time unit that is determined by the terminal device and that is used to transmit the SR is a time unit #3. In this case, in the time unit #4, the time unit #5, and the time unit #6, the terminal device repeatedly sends the feedback information by using the request transmission resource, or repeatedly sends the feedback information and the SR by using the feedback transmission resource. In the time unit #7, the terminal device continues sending the feedback information by using the feedback transmission resource. In addition, in the time unit #3, the terminal device may also send the SR by using the request transmission resource, or may not send the SR.

### Step S122

In step S122, when a time unit that is determined by the terminal device and that is used to transmit the SR is a time unit in the M time units other than an initial time unit in the M time units, the terminal device sends the feedback information in each of the M time units by using the feedback transmission resource, and skips sending the SR in the M time units by using the request transmission resource.

Specifically, if the terminal device has an uplink requirement, and the determined time unit used to transmit the SR is not the initial time unit in the M time units, although a configuration is that the SR is transmitted for a single time, because the determined time unit used to transmit the SR is after the initial time unit in the M time units, the terminal device cannot send the SR in the initial time unit in the M time units. To reduce complexity of combined detection and that is of the network device, in the M time units, the terminal device sends the feedback information by using only the feedback transmission resource, and skips sending the SR.

In a possible implementation, the terminal device sends the SR after the M time units.

From the perspective of a delay, to avoid affecting the delay, in a possible implementation, the terminal device sends the SR in the first time unit that is after the M time units, to be specific, sends the SR in the first time unit that is in the request transmission resource and that is after the M time units.

It should be noted that in the embodiments of this application, that the terminal device sends the SR in a time unit indicates the following: The time unit belongs to the request transmission resource. Similarly, that the terminal device sends the feedback information in a time unit indicates the following: The time unit belongs to the feedback transmission resource.

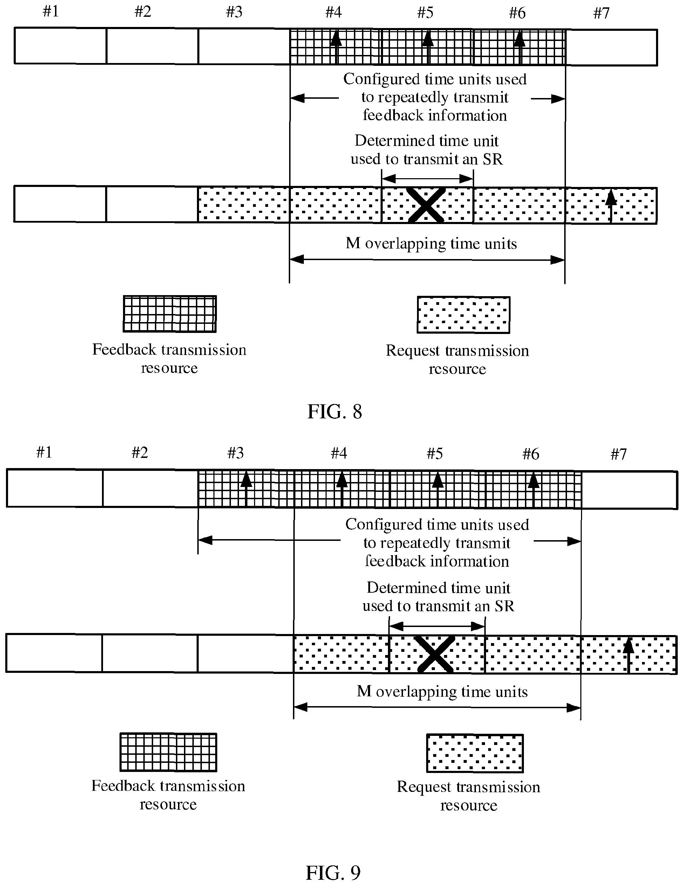

FIG. 8 is another schematic diagram of a feedback transmission resource and a request transmission resource according to an embodiment of this application. As shown in FIG. 8, M=3=P, the M time units include a time unit #4, a time unit #5, and a time unit #6, and the time unit that is determined by the terminal device and that is used to transmit the SR is the time unit #5. In this case, the terminal device repeatedly sends the feedback information in the time unit # 4, the time unit #5, and the time unit #6 by using only the feedback transmission resource. In addition, the terminal device skips sending the SR in the time unit #5. In other words, the SR is prohibited from being sent in the time unit #5. The terminal device may send the SR in the time unit #7 by using the request transmission resource. Therefore, the complexity of the combined detection performed by the network device is reduced.

FIG. 9 is still another schematic diagram of a feedback transmission resource and a request transmission resource according to an embodiment of this application. As shown in FIG. 9, M=3, P=4, the P time units include a time unit #3, a time unit #4, a time unit #5, and a time unit #6, the M time units include the time unit #4, the time unit #5, and the time unit #6, and the time unit that is determined by the terminal device and that is used to transmit the SR is the time unit #5. In this case, similarly, the terminal device repeatedly sends the feedback information in the time unit # 4, the time unit #5, and the time unit #6 by using only the feedback transmission resource. In addition, the terminal device skips sending the SR in the time unit #5, and may send the SR in the time unit #7 by using the request transmission resource. Therefore, the complexity of the combined detection performed by the network device is reduced.

In step S130, in the M time units, the network device detects the feedback information by using the request transmission resource, and detects the feedback information by using the feedback transmission resource. Alternatively, in the M time units, the network device detects the feedback information and the SR by using the feedback transmission resource, and detects the feedback information by using the feedback transmission resource.

Specifically, after determining that the request transmission resource and the feedback transmission resource each have M overlapping time units, although the network device does not learn whether the terminal device sends the SR, the network device learns that the terminal device either sends both the SR and the feedback information in the M time units, or sends only the feedback information in the M time units. Because of such an uncertain factor, in the M time units, the network device not only detects the feedback information and the SR, but also separately detects the feedback information.

If a system specifies that the terminal device may send both the feedback information and the SR in the transmission mode #A, for the network device, there are only two manners of the combined detection, and the detection is performed only twice. To be specific, in the M time units, the network device detects the feedback information by using the request transmission resource, and detects the feedback information by using the feedback transmission resource. Specifically, the network device may perform the combined detection in the foregoing only two assumed cases based on a specific implementation algorithm (which is not specifically limited in this embodiment of this application), to determine whether the terminal device sends the SR and whether the feedback information fed back by the terminal device is an ACK or a NACK. It can be learned that in implementations of this application, the complexity of the combined detection performed by the network device can be effectively reduced.

If a system specifies that the terminal device may send both the feedback information and the SR in the transmission mode #B, the network device detects the feedback information and the SR by using the feedback transmission resource, and detects the feedback information by using the feedback transmission resource. On the one hand, because time units in which the combined detection may be performed are not affected by a specific sending location of the SR transmitted for a single time (as described above), the network device does not need to assume a location of a time unit in which the SR is sent, but may directly combine time units used to send both the feedback information and the SR, that is, perform the combined detection on information sent in the M time units, thereby reducing the complexity of the combined detection performed by the network device. On the other hand, because it can be ensured that same information is transmitted in the M time units, performance of the feedback information and/or the SR can be ensured as much as possible while the complexity of the combined detection performed by the network device is reduced.

It should be noted that the network device may detect, by using the request transmission resource, the SR in a time unit that is other than the M time units and that is in the request transmission resource. A specific manner is similar to that in the prior art, and details are not described herein again.

In conclusion, according to the information transmission method in this embodiment of this application, when the request transmission resource used to transmit the SR and the feedback transmission resource used to repeatedly transmit the feedback information both include the M time units in time domain, there are two cases as follows: If the terminal device has the uplink transmission requirement, and the duration between the determined time unit used to transmit the SR and the initial time unit in the M time units is less than the preset duration, the terminal device repeatedly sends both the feedback information and the SR in the M time units (repeatedly sends the feedback information by using the request transmission resource, or repeatedly sends both the feedback information and the SR by using the feedback transmission resource). Alternatively, if the terminal device has the uplink transmission requirement, and the determined time unit used to transmit the SR is the time unit in the M time units other than the initial time unit in the M time units, in the M time units, the terminal device sends the feedback information by using only the feedback transmission resource, and skips sending the SR by using the request transmission resource. In this way, if the terminal device sends the feedback information by using the request transmission resource, in the M time units, the network device detects the feedback information by using the request transmission resource, and detects the feedback information by using the feedback transmission resource. There are only two manners of the combined detection, and the detection is performed only twice. This reduces types of manners of combined detection performed by the network device and detection times, thereby reducing the complexity of the combined detection performed by the network device. Alternatively, if the terminal device sends the feedback information and the SR by using the feedback transmission resource, in the M time units, the network device detects the feedback information and the SR by using the feedback transmission resource, and detects the feedback information by using the feedback transmission resource. On the one hand, because the time units in which the combined detection may be performed are not affected by the specific sending location of the SR, the network device does not need to assume the location of the time unit in which the SR is sent, but may directly combine the time units used to send both the feedback information and the SR, that is, perform the combined detection on the information sent in the M time units, thereby reducing the complexity of the combined detection performed by the network device. On the other hand, because it can be ensured that the same information is transmitted in the M time units, the performance of the feedback information and/or the SR can be ensured as much as possible while the complexity of the combined detection performed by the network device is reduced.

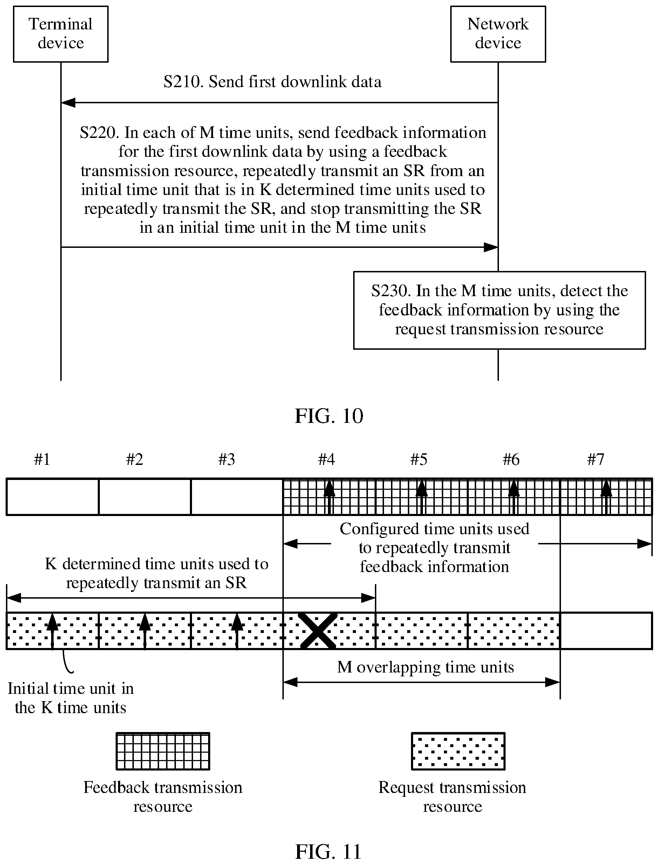

With reference to FIG. 3 to FIG. 9, the foregoing describes in detail the information transmission method in the scenario of repeatedly transmitting the feedback information and transmitting the SR for the single time. With reference to FIG. 10 to FIG. 21, the following describes in detail information transmission methods in a scenario of repeatedly transmitting feedback information and repeatedly transmitting an SR.

In the scenario, a request transmission resource is used to repeatedly transmit the SR, a feedback transmission resource is used to repeatedly transmit the feedback information, and the request transmission resource and the feedback transmission resource both include M overlapping time units in time domain. For specific descriptions of the request transmission resource and the feedback transmission resource, refer to the descriptions of the request transmission resource and the feedback transmission resource in the method 100. For brevity, details are not described herein again.

In the scenario of repeatedly transmitting the feedback information and repeatedly transmitting the SR, in the overlapping time units, according to a preset rule, a terminal device may also send both the feedback information and the SR or send only the feedback information. The following separately describes embodiments of this application in detail in two cases in which the terminal device sends both the feedback information and the SR, or sends only the feedback information.

### Case 1: The terminal device sends only the feedback information in the M time units.

FIG. 10 is a schematic interaction diagram of an information transmission method 200 according to another embodiment of this application. The following describes each step of the method 200 in detail.

In step S210, a network device sends first downlink data.

In step S220, the terminal device sends the feedback information in each of the M time units by using the feedback transmission resource, and the terminal device repeatedly transmits the SR from an initial time unit in K determined time units used to repeatedly transmit the SR, and stops transmitting the SR from an initial time unit in the M time units, where K is a pre-configured quantity of retransmissions for repeatedly transmitting the SR, and K is an integer greater than 1, where the initial time unit in the K time units is located before the M time units, and a last time unit in the K time units is in the M time units.

It should be noted that, in this embodiment of this application, time units in which the request transmission resource is located may be consecutive in time, or may be non-consecutive in time. A same description is provided for the feedback transmission resource, and details are not described.

Specifically, when the SR is repeatedly transmitted for K times, if having an uplink transmission requirement before the M time units, the terminal device may determine the K time units for transmitting the SR. If the initial time unit in the K time units is located before the M time units, and the last time unit in the K time units is in the M time units; in other words, if the initial time unit in the K time units is located before the M time units, the K time units partially overlap the M time units, the terminal device may repeatedly transmit the SR only in a time unit that is in the K time units and that is before the M time units, and send the feedback information in the M time units by using only the feedback transmission resource.

It should be understood that the K time units that are determined by the terminal device and that are used to repeatedly transmit the SR belong to the request transmission resource.

In step S230, when determining that the request transmission resource and the feedback transmission resource both include the overlapping M time units in time domain, the network device also determines that the terminal device skips sending the SR in the M time units, and sends only the feedback information. Therefore, the network device may detect the feedback information in the M time units by using only the feedback transmission resource.

In addition, the network device detects, by using the request transmission resource, the SR in a time unit that is other than the M time units and that is in the request transmission resource. A specific detection manner is similar to that in the prior art, and details are not described herein again.

Therefore, according to the information transmission method in this embodiment of this application, when the request transmission resource used to repeatedly transmit the SR and the feedback transmission resource used to repeatedly transmit the feedback information both include the M time units in time domain, if the terminal device has the uplink transmission requirement, if the initial time unit in the K determined time units used to repeatedly transmit the SR is located before the M time units, and if the last time unit in the K time units is in the M time units, the terminal device sends the feedback information in the M time units by using only the feedback transmission resource. The terminal device repeatedly sends the SR in only the time unit that is in the K time units and that is before the M time units, and skips sending the SR in remaining time units that are in the K time units. In this way, the network device determines that the terminal device sends only the feedback information in the M time units, and a delay in sending the SR by the terminal device is not affected.

In a possible implementation, the feedback transmission resource includes P time units, where the P time units include the M time units, P is a pre-configured quantity of retransmissions for repeatedly transmitting the feedback information, and P is greater than M.

To be specific, if the initial time unit in the K time units determined by the terminal device is before the M time units, the K time units partially overlap the M time units. In addition, the M time units are in P pre-configured time units used to repeatedly transmit the feedback information. In this case, the terminal device may repeatedly transmit the SR only in the time unit that is before the M time units and that is in the K time units, and send the feedback information in the M time units by using only the feedback transmission resource.

FIG. 11 is a schematic diagram of a request transmission resource and a feedback transmission resource according to another embodiment of this application. As shown in FIG. 11, M=3, P=4, K=4, the P time units include a time unit #4, a time unit #5, a time unit #6, and a time unit #7, the M time units include the time unit #4, the time unit #5, and the time unit #6, and the K time units that are determined by the terminal device and that are used to transmit the SR are a time unit #1 to the time unit #4. In this case, the terminal device repeatedly transmits the SR from the time unit #1 to the time unit #3, and does not need to send the SR in the time unit #4. The terminal device repeatedly sends the feedback information only in the time unit #4, the time unit #5, and the time unit #6 by using the feedback transmission resource. In this way, complexity of combined detection and that is of the network device is reduced.

As an example instead of a limitation, M is a pre-configured quantity of retransmissions for repeatedly transmitting the feedback information, that is, M=P.

### Case 2: The terminal device sends both the SR and the feedback information in the M time units.

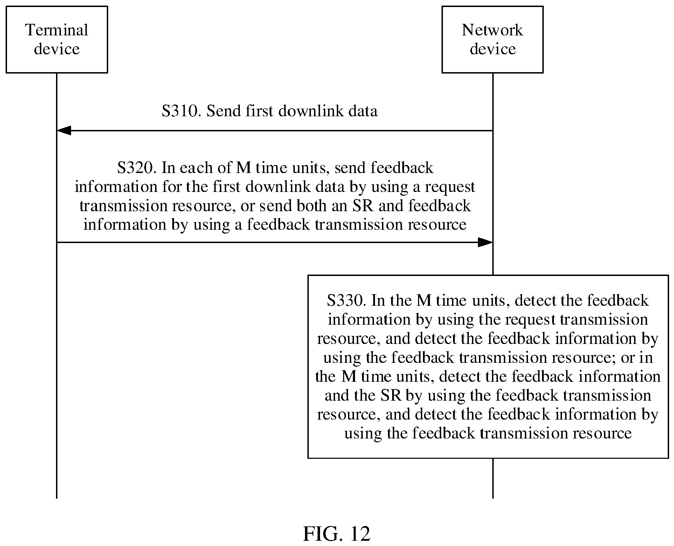

FIG. 12 is a schematic interaction diagram of an information transmission method 300 according to another embodiment of this application. The following describes each step of the method 300 in detail.

In step S310, a network device sends first downlink data.

In step S320, in each of the M time units, the terminal device sends the feedback information by using the request transmission resource, or sends both the SR and the feedback information by using the feedback transmission resource.

An initial time unit in K time units that are determined by the terminal device and that are used to repeatedly transmit the SR is not later than an initial time unit in the M time units, and a last time unit in the K time units is in the M time units, where K is a pre-configured quantity of retransmissions for repeatedly transmitting the SR, and K is an integer greater than 1.

Specifically, if the terminal device has an uplink requirement before the M time units, if the initial time unit in the K determined time units used to repeatedly transmit the SR is before the M time units or is the initial time unit in the M time units, and if the last time unit in the K time units is in the M time units, the terminal device may send both the feedback information and the SR in the M time units; to be specific, the terminal device sends the feedback information by using the request transmission resource, or sends both the feedback information and the SR by using the feedback transmission resource.

In other words, if the terminal device has the uplink requirement before the M time units, if the initial time unit in the K determined time units used to repeatedly transmit the SR is before the M time units or is the initial time unit in the M time units, and if the K time units and the M time units at least partially overlap, the terminal device may send both the feedback information and the SR in the M time units; to be specific, the terminal device sends the feedback information by using the request transmission resource, or sends both the feedback information and the SR by using the feedback transmission resource.

In step S330, in the M time units, the network device detects the feedback information by using the request transmission resource, and detects the feedback information by using the feedback transmission resource. Alternatively, in the M time units, the network device detects the feedback information and the SR by using the feedback transmission resource, and detects the feedback information by using the feedback transmission resource.

Specifically, after determining that the request transmission resource and the feedback transmission resource each have M overlapping time units, the network device determines that if the terminal device has the uplink transmission requirement, the terminal device may send both the SR and the feedback information in the M time units, or if the terminal device has no transmission requirement, the terminal device may send only the feedback information. Because of such an uncertain factor, in the M time units, the network device not only detects the feedback information and the SR, but also separately detects the feedback information.

As described above, if the terminal device sends the feedback information and the SR in a transmission mode #A, the network device may correspondingly detect the feedback information by using the request transmission resource, and detect the feedback information by using the feedback transmission resource. If the terminal device sends the feedback information in a transmission mode #B, the network device correspondingly detects the feedback information and the SR by using the feedback transmission resource, and detects the feedback information by using the feedback transmission resource. For a specific description, refer to the description of step S130 in the method 100. For brevity, details are not described herein again.

It should be noted that the network device may detect, by using the request transmission resource, the SR in a time unit that is other than the M time units and that is in the request transmission resource. A specific manner is similar to that in the prior art, and details are not described herein again.

Therefore, according to the information transmission method in this embodiment of this application, when the request transmission resource used to repeatedly transmit the SR and the feedback transmission resource used to repeatedly transmit the feedback information both include the M time units in time domain, if the terminal device has the uplink transmission requirement, and if the initial time unit in the K determined time units used to repeatedly transmit the SR is not later than the initial time unit in the M time units, in the M time units, the terminal device repeatedly sends both the feedback information and the SR, to be specific, repeatedly sends the feedback information by using the request transmission resource, or repeatedly sends both the feedback information and the SR by using the feedback transmission resource. In this way, the network device determines that the terminal device may send both the feedback information and the SR in the M time units. If the terminal device sends the feedback information by using the request transmission resource, in the M time units, the network device detects the feedback information by using the request transmission resource, and detects the feedback information by using the feedback transmission resource. There are only two manners of combined detection, and the detection is performed only twice. This reduces types of manners of combined detection performed by the network device and detection times, thereby reducing complexity of the combined detection performed by the network device. If the terminal device sends the feedback information and the SR by using the feedback transmission resource, in the M time units, the network device detects the feedback information and the SR by using the feedback transmission resource, and detects the feedback information by using the feedback transmission resource. On the one hand, because time units in which the combined detection may be performed are not affected by a specific sending location of the SR, the network device does not need to assume a location of a time unit in which the SR is sent, but may directly combine time units used to send both the feedback information and the SR, that is, perform the combined detection on information sent in the M time units, thereby reducing the complexity of the combined detection performed by the network device. On the other hand, because it can be ensured that same information is transmitted in the M time units, performance of the feedback information and/or the SR can be ensured as much as possible while the complexity of the combined detection performed by the network device is reduced.

In the embodiments of this application, the K time units may completely overlap the M time units, or may partially overlap the M time units. The following separately describes the embodiments of this application based on two cases: The K time units completely overlap the M time units, or the K time units partially overlap the M time units.

### Case 2A: The K time units partially overlap the M time units

When the initial time unit in the K time units is before the M time units, regardless of which time unit in the M time units is the last time unit in the K time units, the K time units inevitably partially overlap the M time units.

In this case, when sending both the SR and the feedback information in the M time units, the terminal device may send the SR or may not send the SR in a time unit that is in the K time units and that is before the M time units.

In a possible implementation, the terminal device may determine, based on K, a time unit in which the SR is sent, that is in the K time units, and that is before the M time units.

For example, if K is greater than or equal to M, the terminal device may start to send the SR from the (K-M)^{th} time unit that is before the M time units, to a last time unit in the M time units. Therefore, the SR is retransmitted for K times as pre-configured.

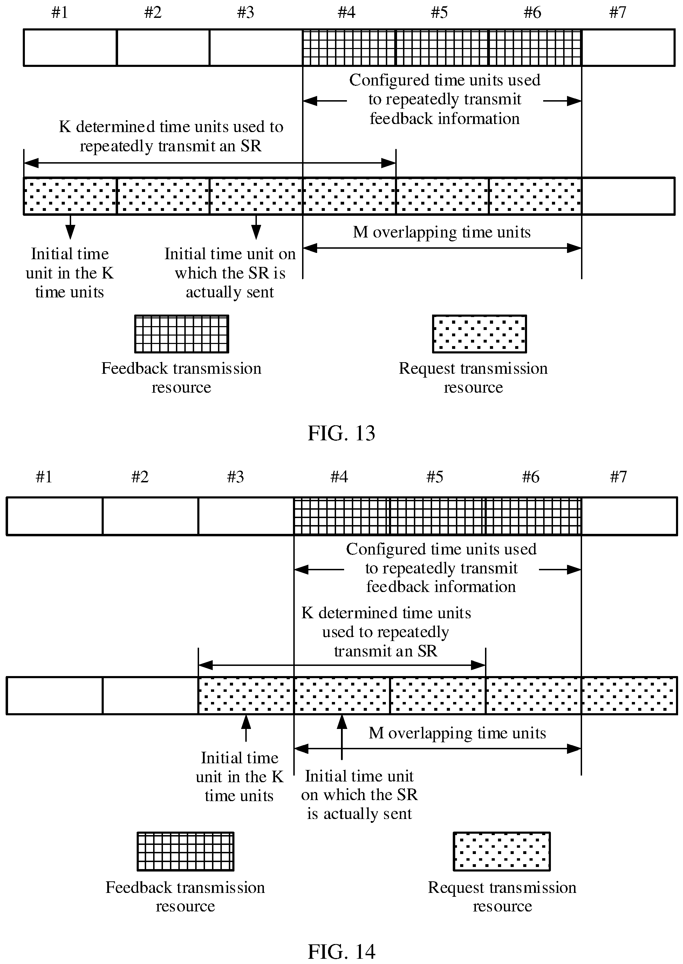

FIG. 13 is a schematic diagram of a request transmission resource and a feedback transmission resource according to still another embodiment of this application. As shown in FIG. 13, M=3=P, K=4, the M time units include a time unit #4, a time unit #5, and a time unit #6, and the K time units that are determined by the terminal device and that are used to transmit the SR are a time unit #1 to the time unit #4 (it is assumed that when the terminal device has the uplink transmission requirement, if the terminal device sends the SR in an available time unit closest to a moment of the uplink transmission requirement, the terminal device may determine to transmit the SR from the time unit #1). In this case, the terminal device may start to send the SR from the time unit #3 to the time unit #6. The terminal device sends the SR in the time unit #3 by using the request transmission resource. The terminal device repeatedly sends both the SR and the feedback information in the time unit #4, the time unit #5, and the time unit #6; to be specific, the terminal device sends the feedback information by using the request transmission resource, or sends the feedback information and the SR by using the feedback transmission resource.

FIG. 14 is another schematic diagram of a request transmission resource and a feedback transmission resource according to still another embodiment of this application. As shown in FIG. 14, M=3=P, K=4, the M time units include a time unit #4, a time unit #5, and a time unit #6, and the K time units that are determined by the terminal device and that are used to transmit the SR are a time unit #3 to the time unit 5. In this case, the terminal device may start to send the SR from the time unit #4 to the time unit #6.

As an example instead of a limitation, the terminal device may alternatively send the SR from a determined initial time unit used to transmit the SR, to the last time unit in the M time units.

FIG. 13 is still used as an example. The terminal device may repeatedly send the SR from the time unit #1. For example, the terminal device sends the SR from the time unit #1 to the time unit #3 by using the request transmission resource. The terminal device repeatedly sends both the SR and the feedback information in the time unit #4, the time unit #5, and the time unit #6; to be specific, the terminal device sends the feedback information by using the request transmission resource, or sends the feedback information and the SR by using the feedback transmission resource.

It should be understood that, if the terminal device starts to send the SR from the initial time unit in the K time units, an actual quantity of times of repeatedly transmitting the SR is greater than K.

In a possible implementation, duration between the initial time unit in the K time units and the initial time unit in the M time units is less than preset duration.

To be specific, if the duration between the initial time unit in the K time units and the initial time unit in the M time units is relatively short, the terminal device may send both the SR and the feedback information in the M time units. In this case, the terminal device may not send the SR in the time unit that is in the K time units and that is before the M time units.

The preset duration may be predefined, or may be configured by the network device by using higher layer signaling, MAC signaling, or physical layer signaling (which may also be referred to as dynamic signaling). This is not limited in the embodiments of this application.

In this way, not only the complexity of the combined detection performed by the network device can be reduced, but also a delay in transmitting the SR can be effectively controlled.

In a possible implementation, the last time unit in the K time units is a time unit in the M time units other than the last time unit in the M time units.

For example, FIG. 14 is a schematic diagram of a request transmission resource and a feedback transmission resource.

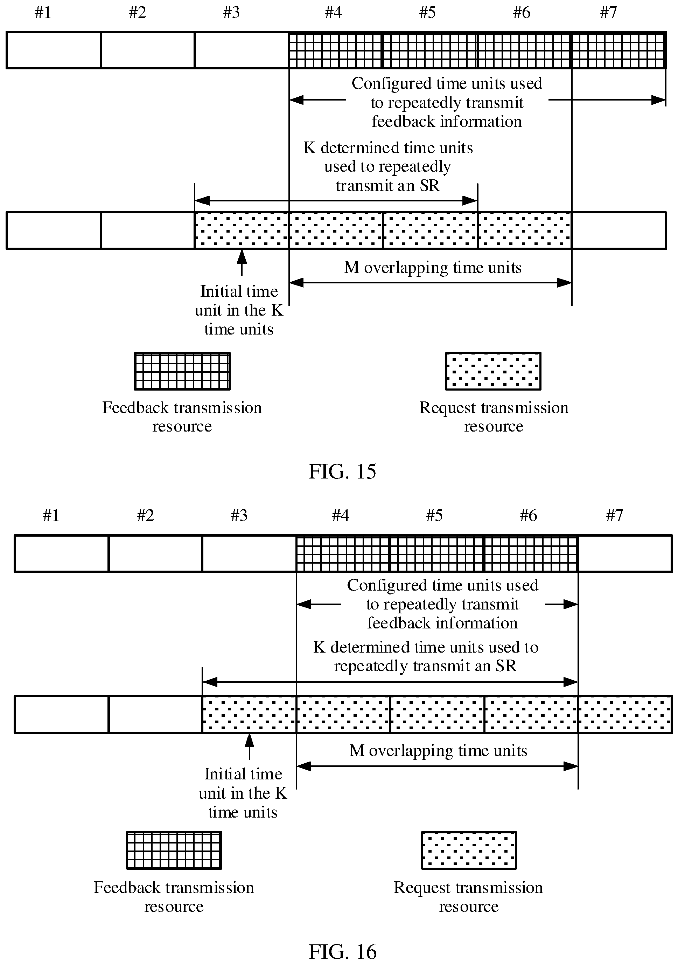

FIG. 15 is another schematic diagram of a request transmission resource and a feedback transmission resource according to still another embodiment of this application. As shown in FIG. 15, M=3, P=4, K=3, the P time units include a time unit #4 to a time unit #7, the M time units include the time unit #4, the time unit #5, and the time unit #6, and the K time units that are determined by the terminal device and that are used to transmit the SR are a time unit #3, the time unit #4, and the time unit #5. The last time unit in the K time units is the time unit #5 rather than the time unit #6.

In a possible implementation, the last time unit in the K time units is the last time unit in the M time units.

FIG. 16 is another schematic diagram of a request transmission resource and a feedback transmission resource according to still another embodiment of this application. As shown in FIG. 16, M=3=P, K=4, the M time units include a time unit #4, a time unit #5, and a time unit #6, and the K time units that are determined by the terminal device and that are used to transmit the SR are a time unit #3 to the time unit #6. The last time unit in the K time units is the last time unit, namely, the time unit #6, in the M time units.

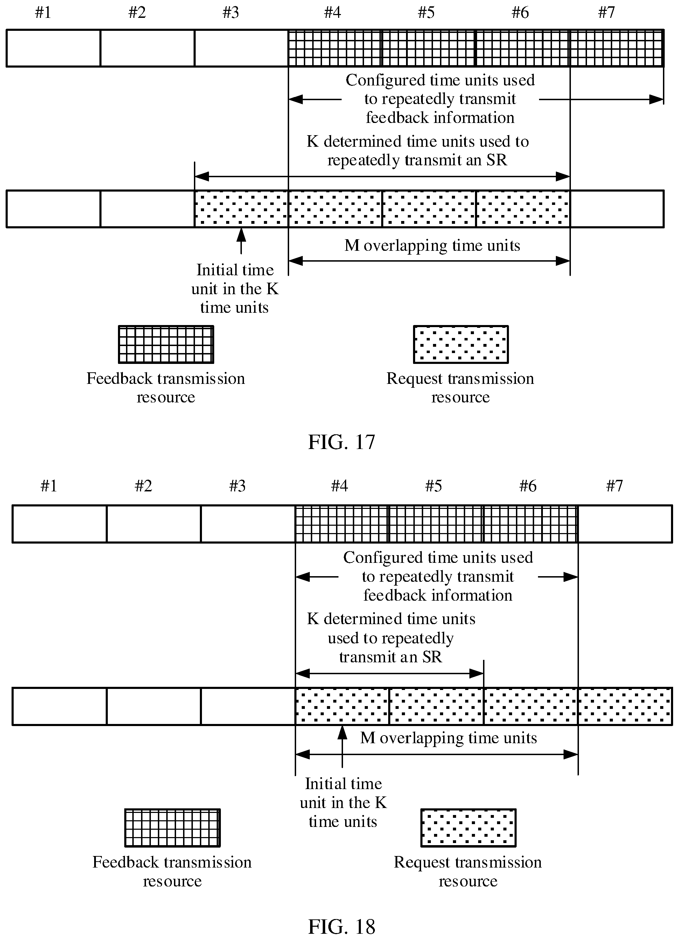

FIG. 17 is another schematic diagram of a request transmission resource and a feedback transmission resource according to still another embodiment of this application. As shown in FIG. 17, M=3, P=4, K=4, the P time units include a time unit #4 to a time unit #7, the M time units include the time unit #4, the time unit #5, and the time unit #6, and the K time units that are determined by the terminal device and that are used to transmit the SR are a time unit #3 to the time unit #6. The last time unit in the K time units is the last time unit, namely, the time unit #6, in the M time units.

In a possible implementation, the initial time unit in the K time units is the initial time unit in the M time units, the last time unit in the K time units is a time unit in the M time units other than the last time unit in the M time units.

FIG. 18 is another schematic diagram of a request transmission resource and a feedback transmission resource according to still another embodiment of this application. As shown in FIG. 18, M=3=P, K=2, the M time units include a time unit #4, a time unit #5, and a time unit #6, and the K time units that are determined by the terminal device and that are used to transmit the SR are the time unit #4 and the time unit #5. The initial time unit in the K time units is the initial time unit, namely, the time unit #3, in the M time units. The last time unit in the K time units is the time unit #5, and is not the last time unit, namely, the time unit #6, in the M time units. In this case, although K = 2, because the time unit #6 also includes an SR resource, the terminal device may send the SR from the time unit #4 to the time unit #6. In this way, detection complexity on a network device side can be reduced.

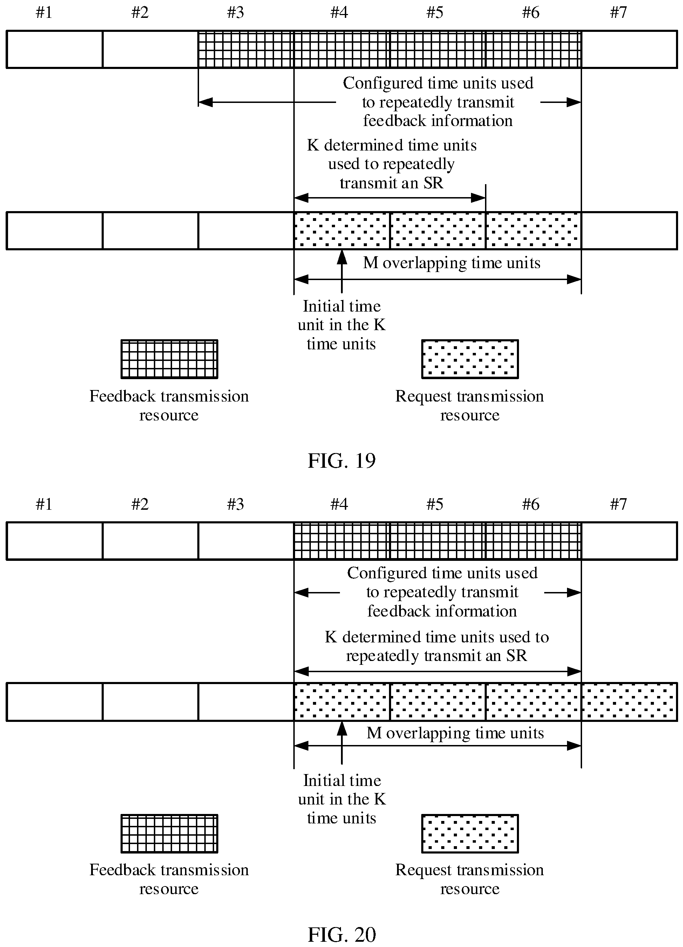

FIG. 19 is another schematic diagram of a request transmission resource and a feedback transmission resource according to still another embodiment of this application. As shown in FIG. 19, M=3, P=4, K=2, the P time units include a time unit #3 to a time unit #6, the M time units include the time unit #4, the time unit #5, and the time unit #6, and the K time units that are determined by the terminal device and that are used to transmit the SR are the time unit #4 and the time unit #5. The initial time unit in the K time units is the initial time unit, namely, the time unit #4, in the M time units. The last time unit in the K time units is the time unit #5, and is not the last time unit, namely, the time unit #6, in the M time units. In this case, although K = 2, because the time unit #6 also includes an SR resource, the terminal device may send the SR from the time unit #4 to the time unit #6. In this way, detection complexity on a network device side can be reduced.

### Case 2B

The K time units completely overlap the M time units.

FIG. 20 is another schematic diagram of a request transmission resource and a feedback transmission resource according to still another embodiment of this application. As shown in FIG. 20, M=3=P, K=3, the M time units include a time unit #4, a time unit #5, and a time unit #6, and the K time units that are determined by the terminal device and that are used to transmit the SR are also the time unit #4, the time unit #5, and the time unit #6. That is, the K time units completely overlap the M time units.

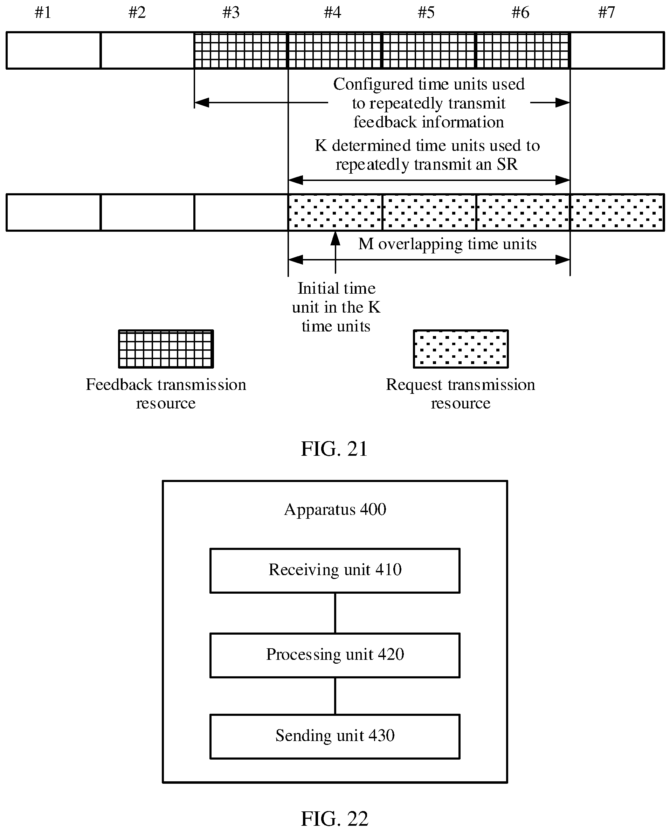

FIG. 21 is still another schematic diagram of a request transmission resource and a feedback transmission resource according to still another embodiment of this application. As shown in FIG. 21, M=3, P=4, K=3, the feedback transmission resource includes a time unit #3 to a time unit #6, the M time units include the time unit #4, the time unit #5, and the time unit #6, and the K time units that are determined by the terminal device and that are used to transmit the SR are also the time unit #4, the time unit #5, and the time unit #6. That is, the K time units completely overlap the M time units.

In the embodiments of this application, in the scenario in which the feedback information is repeatedly transmitted and the SR is repeatedly transmitted, the terminal device and the network device may perform technical solutions in any one of case 1 (to be specific, the terminal device may send only the feedback information in the M time units) or case 2 (to be specific, the terminal device sends both the SR and the feedback information in the M time units).

Alternatively, when there is no contradiction in technical solutions, the terminal device and the network device may partially combine the case 1 and the case 2 for usage. In other words, the terminal device and the network device may perform a technical solution obtained after the case 1 and the case 2 are combined. This is not limited in the embodiments of this application. For example, when the initial time unit in the K time units is the initial time unit in the M time units, the technical solution in case 2 may be performed. When the initial time unit in the K time units is earlier than the initial time unit in the M time units, the technical solution in case 2 may be implemented.

The foregoing describes the information transmission methods according to the embodiments of this application in detail with reference to FIG. 3 to FIG. 21. The following describes information transmission apparatuses according to the embodiments of this application with reference to FIG. 22 to FIG. 25. The technical features described in the method embodiments are also applicable to the following apparatus embodiments.

FIG. 22 is a schematic block diagram of an information transmission apparatus 400 according to an embodiment of this application. The apparatus 400 is applied to a communications system including a request transmission resource and a feedback transmission resource. The request transmission resource is used to transmit a scheduling request SR, the feedback transmission resource is used to repeatedly transmit feedback information for first downlink data, and the request transmission resource and the feedback transmission resource both include M overlapping time units in time domain, and M is an integer greater than 1. As shown in FIG. 22, the apparatus 400 includes:
a receiving unit 410, configured to receive the first downlink data; and
a processing unit 420 and a sending unit 430, where
the sending unit 430 is configured to: when duration between an initial time unit in the M time units and a time unit that is determined by the processing unit 420 and that is used to transmit the SR is less than preset duration, in each of the M time units, send the feedback information by using the request transmission resource, or send both the SR and the feedback information by using the feedback transmission resource; or
the sending unit 430 is configured to: when a time unit that is determined by the processing unit 420 and that is used to transmit the SR is a time unit in the M time units other than an initial time unit in the M time units, send the feedback information in each of the M time units by using the feedback transmission resource, and the processing unit controls the sending unit to skip sending the SR in the M time units by using the request transmission resource.

Therefore, when the request transmission resource used to transmit the SR and the feedback transmission resource used to repeatedly transmit the feedback information both include the M time units in time domain, the information transmission apparatus in this embodiment of this application sends the feedback information and the SR according to a relationship between the determined time unit used to transmit the SR and the initial time unit in the M time units. In a case, the apparatus repeatedly sends both the feedback information and the SR in the M time units (repeatedly sends the feedback information by using the request transmission resource, or repeatedly sends both the feedback information and the SR by using the feedback transmission resource). In another case, in the M time units, the apparatus sends the feedback information by using only the feedback transmission resource, and skips sending the SR by using the request transmission resource. In this way, if the apparatus may send the feedback information by using the request transmission resource, in the M time units, the network device detects the feedback information by using the request transmission resource, and detects the feedback information by using the feedback transmission resource. There are only two manners of combined detection, and the detection is performed only twice. This reduces types of manners of combined detection performed by the network device and detection times, thereby reducing complexity of the combined detection performed by the network device. Alternatively, if the apparatus may send the feedback information and the SR by using the feedback transmission resource, in the M time units, the network device detects the feedback information and the SR by using the feedback transmission resource, and detects the feedback information by using the feedback transmission resource. On the one hand, because time units in which the combined detection may be performed are not affected by a specific sending location of the SR, the network device does not need to assume a location of a time unit in which the SR is sent, but may directly combine time units used to send both the feedback information and the SR, that is, perform the combined detection on information sent in the M time units, thereby reducing the complexity of the combined detection performed by the network device. On the other hand, because it can be ensured that same information is transmitted in the M time units, performance of the feedback information and/or the SR can be ensured as much as possible while the complexity of the combined detection performed by the network device is reduced.

In a possible implementation, the sending unit 430 is specifically configured to: when the time unit used to transmit the SR is the initial time unit in the M time units, in each of the M time units, send the feedback information by using the request transmission resource, or send both the SR and the feedback information by using the feedback transmission resource.

In a possible implementation, the sending unit 430 is further configured to:
when the time unit used to transmit the SR is the time unit in the M time units other than the initial time unit in the M time units, send the SR after the M time units.

In a possible implementation, M is a pre-configured quantity of retransmissions for repeatedly transmitting the feedback information.

The information transmission apparatus 400 may correspond to the terminal device described in the foregoing method 100 (for example, may be configured as the terminal device or may be the terminal device), and modules or units in the information transmission apparatus 400 are separately configured to perform actions or processing processes performed by the terminal device in the foregoing method 100. To avoid repetition, details are not described herein again.

In this embodiment of this application, the apparatus 400 may be the terminal device. In this case, the apparatus 300 may include a processor, a transmitter, and a receiver. The processor, the transmitter, and the receiver are in communication connection. Optionally, the apparatus further includes a memory, where the memory and the processor are in communication connection. Optionally, the processor, the memory, the transmitter, and the receiver may be in communication connection. The memory may be configured to store an instruction. The processor is configured to execute the instruction stored in the memory, to control the transmitter to send information or control the receiver to receive a signal.

In this case, the receiving unit 410 in the apparatus 400 shown in FIG. 22 may correspond to the receiver, the processing unit 420 in the apparatus 400 shown in FIG. 22 may correspond to the processor, and the sending unit 430 in the apparatus 400 shown in FIG. 22 may correspond to the transmitter. In another implementation, the transmitter and the receiver may be implemented by a same component, to be specific, a transceiver.

In this embodiment of this application, the apparatus 400 may be a chip (or a chip system) installed in the terminal device. In this case, the apparatus 400 may include a processor and an input/output interface. The processor and a transceiver of the network device may be in communication connection through the input/output interface. Optionally, the apparatus further includes a memory, where the memory and the processor are in communication connection. Optionally, the processor, the memory, and the transceiver may be in communication connection. The memory may be configured to store an instruction. The processor is configured to execute the instruction stored in the memory, to control the transceiver to send information or a signal.

In this case, the receiving unit 410 in the apparatus 400 shown in FIG. 22 may correspond to the input interface, the processing unit 420 in the apparatus 400 shown in FIG. 22 may correspond to the processor, and the sending unit 430 in the apparatus 400 shown in FIG. 22 may correspond to the output interface.

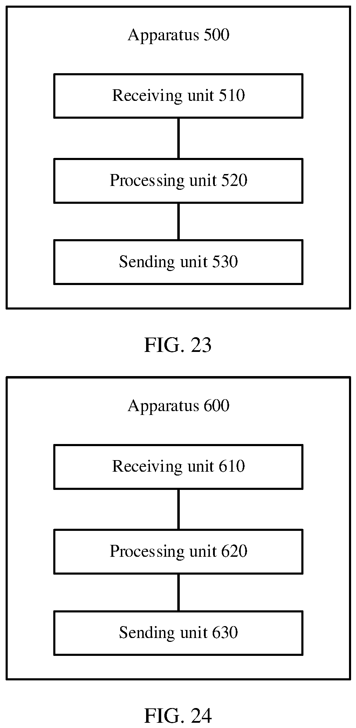

FIG. 23 is a schematic block diagram of an information transmission apparatus 500 according to another embodiment of this application. The apparatus 500 is applied to a communications system including a request transmission resource and a feedback transmission resource. The request transmission resource is used to transmit a scheduling request SR, the feedback transmission resource is used to repeatedly transmit feedback information for first downlink data, and the request transmission resource and the feedback transmission resource both include M overlapping time units in time domain, and M is an integer greater than 1. As shown in FIG. 22, the apparatus 500 includes:
a receiving unit 510, configured to receive the first downlink data; and
a processing unit 520 and a sending unit 530, where
the sending unit 530 is configured to: send the feedback information in each of the M time units by using the feedback transmission resource; and repeatedly transmit the SR from an initial time unit in K time units that are determined by the processing unit 520 and that are used to repeatedly transmit the SR, and stop transmitting the SR from an initial time unit in the M time units, where K is a pre-configured quantity of retransmissions for repeatedly transmitting the SR, and K is an integer greater than 1.

The initial time unit in the K time units is located before the M time units, and a last time unit in the K time units is in the M time units.

Therefore, when the request transmission resource used to repeatedly transmit the SR and the feedback transmission resource used to repeatedly transmit the feedback information both include the M time units in time domain, if the information transmission apparatus in this embodiment of this application has an uplink transmission requirement, if the initial time unit in the K determined time units used to repeatedly transmit the SR is located before the M time units, and if the last time unit in the K time units is in the M time units, the apparatus sends the feedback information in the M time units by using only the feedback transmission resource. The apparatus repeatedly sends the SR in only a time unit that is in the K time units and that is before the M time units, and skips sending the SR in remaining time units that are in the K time units. In this way, a network device determines that the apparatus sends only the feedback information in the M time units, and may detect the feedback information by using only the feedback transmission resource, thereby reducing detection complexity of the network device. In addition, a delay in sending the SR by the apparatus is not affected.

In a possible implementation, the last time unit in the K time units is a time unit in the M time units other than a last time unit in the M time units.

In a possible implementation, the feedback transmission resource includes P time units, where the P time units include the M time units, P is a pre-configured quantity of retransmissions for repeatedly transmitting the feedback information, and P is greater than M.

In a possible implementation, M is a pre-configured quantity of retransmissions for repeatedly transmitting the feedback information.

The information transmission apparatus 500 may correspond to the terminal device described in the foregoing method 200 (for example, may be configured as the terminal device or may be the terminal device), and modules or units in the information transmission apparatus 500 are separately configured to perform actions or processing processes performed by the terminal device in the foregoing method 200. To avoid repetition, details are not described herein again.

In this embodiment of this application, the apparatus 500 may be the terminal device. In this case, the apparatus 500 may include a processor, a transmitter, and a receiver. The processor, the transmitter, and the receiver are in communication connection. Optionally, the apparatus further includes a memory, where the memory and the processor are in communication connection. Optionally, the processor, the memory, the transmitter, and the receiver may be in communication connection. The memory may be configured to store an instruction. The processor is configured to execute the instruction stored in the memory, to control the transmitter to send information or control the receiver to receive a signal.

In this case, the receiving unit 510 in the apparatus 500 shown in FIG. 23 may correspond to the receiver, the processing unit 520 in the apparatus 500 shown in FIG. 23 may correspond to the processor, and the sending unit 530 in the apparatus 500 shown in FIG. 23 may correspond to the transmitter. In another implementation, the transmitter and the receiver may be implemented by a same component, to be specific, a transceiver.

In this embodiment of this application, the apparatus 500 may be a chip (or a chip system) installed in the terminal device. In this case, the apparatus 500 may include a processor and an input/output interface. The processor and a transceiver of the network device may be in communication connection through the input/output interface. Optionally, the apparatus further includes a memory, where the memory and the processor are in communication connection. Optionally, the processor, the memory, and the transceiver may be in communication connection. The memory may be configured to store an instruction. The processor is configured to execute the instruction stored in the memory, to control the transceiver to send information or a signal.

In this case, the receiving unit 510 in the apparatus 500 shown in FIG. 23 may correspond to the input interface, the processing unit 520 in the apparatus 500 shown in FIG. 23 may correspond to the processor, and the sending unit 530 in the apparatus 500 shown in FIG. 23 may correspond to the output interface.

FIG. 24 is a schematic block diagram of an information transmission apparatus according to another embodiment of this application. The apparatus is applied to a communications system including a request transmission resource and a feedback transmission resource. The request transmission resource is used to transmit a scheduling request SR, the feedback transmission resource is used to repeatedly transmit feedback information for first downlink data, and the request transmission resource and the feedback transmission resource both include M overlapping time units in time domain, and M is an integer greater than 1. As shown in FIG. 24, the apparatus includes:
a receiving unit 610, configured to receive the first downlink data; and
a processing unit 620 and a sending unit 630, where
the sending unit 630 is configured to: in each of the M time units, send the feedback information by using the request transmission resource, or send both the SR and the feedback information by using the feedback transmission resource.

An initial time unit in K time units that are determined by the processing unit 620 and that are used to repeatedly transmit the SR is not later than an initial time unit in the M time units, and a last time unit in the K time units is in the M time units, where K is a pre-configured quantity of retransmissions for repeatedly transmitting the SR, and K is an integer greater than 1.

Therefore, when the request transmission resource used to repeatedly transmit the SR and the feedback transmission resource used to repeatedly transmit the feedback information both include the M time units in time domain, if the information transmission apparatus in this embodiment of this application has an uplink transmission requirement, and if the initial time unit in the K determined time units used to repeatedly transmit the SR is not later than the initial time unit in the M time units, in the M time units, the apparatus repeatedly sends both the feedback information and the SR, to be specific, repeatedly sends the feedback information by using the request transmission resource, or repeatedly sends both the feedback information and the SR by using the feedback transmission resource. In this way, a network device determines that the apparatus may send both the feedback information and the SR in the M time units. If the apparatus sends the feedback information by using the request transmission resource, in the M time units, the network device detects the feedback information by using the request transmission resource, and detects the feedback information by using the feedback transmission resource. There are only two manners of combined detection, and the detection is performed only twice. This reduces types of manners of combined detection performed by the network device and detection times, thereby reducing complexity of the combined detection performed by the network device. If the apparatus sends the feedback information and the SR by using the feedback transmission resource, in the M time units, the network device detects the feedback information and the SR by using the feedback transmission resource, and detects the feedback information by using the feedback transmission resource. On the one hand, because time units in which the combined detection may be performed are not affected by a specific sending location of the SR, the network device does not need to assume a location of a time unit in which the SR is sent, but may directly combine time units used to send both the feedback information and the SR, that is, perform the combined detection on information sent in the M time units, thereby reducing the complexity of the combined detection performed by the network device. On the other hand, because it can be ensured that the same information is transmitted in the M time units, performance of the feedback information and/or the SR can be ensured as much as possible while the complexity of the combined detection performed by the network device is reduced.

In a possible implementation, the last time unit in the K time units is a time unit in the M time units other than a last time unit in the M time units.

In a possible implementation, the initial time unit in the K time units is the initial time unit in the M time units.

In a possible implementation, M is a pre-configured quantity of retransmissions for repeatedly transmitting the feedback information.

The information transmission apparatus 600 may correspond to the terminal device described in the foregoing method 300 (for example, may be configured as the terminal device or may be the terminal device), and modules or units in the information transmission apparatus 600 are separately configured to perform actions or processing processes performed by the terminal device in the foregoing method 300. To avoid repetition, details are not described herein again.

In this embodiment of this application, the apparatus 600 may be the terminal device. In this case, the apparatus 600 may include a processor, a transmitter, and a receiver. The processor, the transmitter, and the receiver are in communication connection. Optionally, the apparatus further includes a memory, where the memory and the processor are in communication connection. Optionally, the processor, the memory, the transmitter, and the receiver may be in communication connection. The memory may be configured to store an instruction. The processor is configured to execute the instruction stored in the memory, to control the transmitter to send information or control the receiver to receive a signal.

In this case, the receiving unit 610 in the apparatus 600 shown in FIG. 24 may correspond to the receiver, the processing unit 620 in the apparatus 600 shown in FIG. 24 may correspond to the processor, and the sending unit 630 in the apparatus 600 shown in FIG. 24 may correspond to the transmitter. In another implementation, the transmitter and the receiver may be implemented by a same component, to be specific, a transceiver.

In this embodiment of this application, the apparatus 600 may be a chip (or a chip system) installed in the terminal device. In this case, the apparatus 600 may include a processor and an input/output interface. The processor and a transceiver of the network device may be in communication connection through the input/output interface. Optionally, the apparatus further includes a memory, where the memory and the processor are in communication connection. Optionally, the processor, the memory, and the transceiver may be in communication connection. The memory may be configured to store an instruction. The processor is configured to execute the instruction stored in the memory, to control the transceiver to send information or a signal.

In this case, the receiving unit 610 in the apparatus 600 shown in FIG. 24 may correspond to the input interface, the processing unit 620 in the apparatus 600 shown in FIG. 24 may correspond to the processor, and the sending unit 630 in the apparatus 600 shown in FIG. 24 may correspond to the output interface.

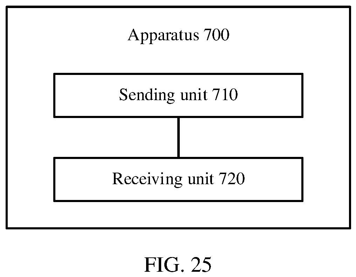

FIG. 25 is a schematic block diagram of an information transmission apparatus according to still another embodiment of this application. The apparatus is applied to a communications system including a request transmission resource and a feedback transmission resource. The request transmission resource is used to transmit a scheduling request SR, the feedback transmission resource is used to repeatedly transmit feedback information for first downlink data, and the request transmission resource and the feedback transmission resource both include M overlapping time units in time domain, and M is an integer greater than 1. As shown in FIG. 25, the apparatus includes:
a sending unit 710, configured to send the first downlink data; and
a receiving unit 720, configured to: in the M time units, detect the feedback information by using the request transmission resource, and
detect the feedback information by using the feedback transmission resource; or in the M time units, detect the feedback information and the SR by using the feedback transmission resource, and detect the feedback information by using the feedback transmission resource.

The information transmission apparatus 700 may correspond to the network device described in the method 100 or 300 (for example, may be configured as the network device or may be the network device), and modules or units in the information transmission apparatus 700 are separately configured to perform actions or processing processes performed by the network device in the method 100 or 300. To avoid repetition, details are not described herein again.

In this embodiment of this application, the apparatus 700 may be the network device. In this case, the apparatus 700 may include a processor, a transmitter, and a receiver. The processor, the transmitter, and the receiver are in communication connection. Optionally, the apparatus further includes a memory, where the memory and the processor are in communication connection. Optionally, the processor, the memory, the transmitter, and the receiver may be in communication connection. The memory may be configured to store an instruction. The processor is configured to execute the instruction stored in the memory, to control the transmitter to send information or control the receiver to receive a signal.

In this case, the sending unit 710 in the apparatus 700 shown in FIG. 25 may correspond to the transmitter, and the receiving unit 720 in the apparatus 700 shown in FIG. 25 may correspond to the receiver. In another implementation, the transmitter and the receiver may be implemented by a same component, to be specific, a transceiver.

In this embodiment of this application, the apparatus 700 may be a chip (or a chip system) installed in the terminal device. In this case, the apparatus 700 may include a processor and an input/output interface. The processor and a transceiver of the network device may be in communication connection through the input/output interface. Optionally, the apparatus further includes a memory, where the memory and the processor are in communication connection. Optionally, the processor, the memory, and the transceiver may be in communication connection. The memory may be configured to store an instruction. The processor is configured to execute the instruction stored in the memory, to control the transceiver to send information or a signal.

In this case, the sending unit 710 in the apparatus 700 shown in FIG. 25 may correspond to the output interface, and the receiving unit 720 in the apparatus 700 shown in FIG. 25 may correspond to the input interface.

It should be noted that the foregoing method embodiments in the embodiments of this application may be applied to a processor, or implemented by a processor. The processor may be an integrated circuit chip and has a signal processing capability. In an implementation process, steps in the foregoing method embodiments may be completed through a hardware integrated logical circuit in the processor or an instruction in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the method, steps, and logical block diagrams disclosed in the embodiments of this application. The general-purpose processor may be a microprocessor, or the processor may be any conventional processor or the like. The steps of the method disclosed with reference to the embodiments of this application may be directly executed and completed by a hardware decoding processor, or may be executed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods by using the hardware of the processor.

It may be understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification is intended to include but is not limited to these memories and any memory of another proper type.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed systems, apparatuses, and methods may be implemented in other manners. For example, the described apparatus embodiments are merely examples. For example, the division of units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, applied to a communications system comprising a request transmission resource and a feedback transmission resource, wherein the request transmission resource is used to transmit a scheduling request SR, the feedback transmission resource is used to repeatedly transmit feedback information for first downlink data, and the request transmission resource and the feedback transmission resource both comprise M overlapping time units in time domain, wherein M is an integer greater than 1; and the method comprises:
receiving, by a terminal device, the first downlink data; and
when duration between an initial time unit in the M time units and a time unit that is determined by the terminal device and that is used to transmit the SR is less than preset duration, in each of the M time units, sending, by the terminal device, the feedback information by using the request transmission resource, or sending both the SR and the feedback information by using the feedback transmission resource; or
when a time unit that is determined by the terminal device and that is used to transmit the SR is a time unit in the M time units other than an initial time unit in the M time units, sending, by the terminal device, the feedback information in each of the M time units by using the feedback transmission resource, and skipping sending the SR in the M time units by using the request transmission resource.

2. The method according to claim 1, wherein the sending, by the terminal device in each of the M time units, the feedback information by using the request transmission resource, or sending both the SR and the feedback information by using the feedback transmission resource comprises:
when the time unit used to transmit the SR is the initial time unit in the M time units, in each of the M time units, sending, by the terminal device, the feedback information by using the request transmission resource, or sending both the SR and the feedback information by using the feedback transmission resource.

3. The method according to claim 1, wherein the method further comprises:
when the time unit used to transmit the SR is the time unit in the M time units other than the initial time unit in the M time units, sending, by the terminal device, the SR after the M time units.

4. The method according to any one of claims 1 to 3, wherein M is a pre-configured quantity of retransmissions for repeatedly transmitting the feedback information.

5. An information transmission method, applied to a communications system comprising a request transmission resource and a feedback transmission resource, wherein the request transmission resource is used to repeatedly transmit a scheduling request SR, the feedback transmission resource is used to repeatedly transmit feedback information for first downlink data, and the request transmission resource and the feedback transmission resource both comprise M overlapping time units in time domain, wherein M is an integer greater than 1; and the method comprises:
receiving, by a terminal device, the first downlink data; and
sending, by the terminal device, the feedback information in each of the M time units by using the feedback transmission resource; and repeatedly transmitting, by the terminal device, the SR from an initial time unit in K determined time units used to repeatedly transmit the SR, and stopping transmitting the SR from an initial time unit in the M time units, wherein K is a pre-configured quantity of retransmissions for repeatedly transmitting the SR, and K is an integer greater than 1, wherein
the initial time unit in the K time units is located before the M time units, and a last time unit in the K time units is in the M time units.

6. The method according to claim 5, wherein the last time unit in the K time units is a time unit in the M time units other than a last time unit in the M time units.

7. The method according to claim 5 or 6, wherein the feedback transmission resource comprises P time units, the P time units comprise the M time units, P is a pre-configured quantity of retransmissions for repeatedly transmitting the feedback information, and P is greater than M.

8. The method according to claim 5 or 6, wherein M is a pre-configured quantity of retransmissions for repeatedly transmitting the feedback information.

9. An information transmission method, applied to a communications system comprising a request transmission resource and a feedback transmission resource, wherein the request transmission resource is used to repeatedly transmit a scheduling request SR, the feedback transmission resource is used to repeatedly transmit feedback information for first downlink data, and the request transmission resource and the feedback transmission resource both comprise M overlapping time units in time domain, wherein M is an integer greater than 1; and the method comprises:
receiving, by a terminal device, the first downlink data; and
in each of the M time units, sending, by the terminal device, the feedback information by using the request transmission resource, or sending both the SR and the feedback information by using the feedback transmission resource, wherein
an initial time unit in K time units that are determined by the terminal device and that are used to repeatedly transmit the SR is not later than an initial time unit in the M time units, a last time unit in the K time units is in the M time units, K is a pre-configured quantity of retransmissions for repeatedly transmitting the SR, and K is an integer greater than 1.

10. The method according to claim 9, wherein the last time unit in the K time units is a time unit in the M time units other than a last time unit in the M time units.

11. The method according to claim 9 or 10, wherein the initial time unit in the K time units is the initial time unit in the M time units.

12. The method according to any one of claims 9 to 11, wherein M is a pre-configured quantity of retransmissions for repeatedly transmitting the feedback information.

13. An information transmission method, applied to a communications system comprising a request transmission resource and a feedback transmission resource, wherein the request transmission resource is used to transmit a scheduling request SR or repeatedly transmit a scheduling request SR, the feedback transmission resource is used to repeatedly transmit feedback information for first downlink data, and the feedback transmission resource and the request transmission resource both comprise M overlapping time units in time domain, wherein M is an integer greater than 1; and the method comprises:
sending, by a network device, the first downlink data; and
in the M time units, detecting, by the network device, the feedback information by using the request transmission resource, and
detecting the feedback information by using the feedback transmission resource; or
in the M time units, detecting, by the network device, the feedback information and the SR by using the feedback transmission resource, and detecting the feedback information by using the feedback transmission resource.

14. An information transmission apparatus, applied to a communications system comprising a request transmission resource and a feedback transmission resource, wherein the request transmission resource is used to transmit a scheduling request SR, the feedback transmission resource is used to repeatedly transmit feedback information for first downlink data, and the request transmission resource and the feedback transmission resource both comprise M overlapping time units in time domain, wherein M is an integer greater than 1; and the apparatus comprises:
a receiving unit, configured to receive the first downlink data; and
a processing unit and a sending unit, wherein
the sending unit is configured to: when duration between an initial time unit in the M time units and a time unit that is determined by the processing unit and that is used to transmit the SR is less than preset duration, in each of the M time units, send the feedback information by using the request transmission resource, or send both the SR and the feedback information by using the feedback transmission resource; or
the sending unit is configured to: when a time unit that is determined by the processing unit and that is used to transmit the SR is a time unit in the M time units other than the initial time unit in the M time units, send the feedback information in each of the M time units by using the feedback transmission resource, and the processing unit controls the sending unit to skip sending the SR in the M time units by using the request transmission resource.

15. The apparatus according to claim 14, wherein the sending unit is specifically configured to: when the time unit used to transmit the SR is the initial time unit in the M time units, in each of the M time units, send the feedback information by using the request transmission resource, or send both the SR and the feedback information by using the feedback transmission resource.

16. The apparatus according to claim 14, wherein the sending unit is further configured to:
when the time unit used to transmit the SR is the time unit in the M time units other than the initial time unit in the M time units, send the SR after the M time units.

17. The apparatus according to any one of claims 14 to 16, wherein M is a pre-configured quantity of retransmissions for repeatedly transmitting the feedback information.

18. An information transmission apparatus, applied to a communications system comprising a request transmission resource and a feedback transmission resource, wherein the request transmission resource is used to repeatedly transmit a scheduling request SR, the feedback transmission resource is used to repeatedly transmit feedback information for first downlink data, and the request transmission resource and the feedback transmission resource both comprise M overlapping time units in time domain, wherein M is an integer greater than 1; and the apparatus comprises:
a receiving unit, configured to receive the first downlink data; and
a processing unit and a sending unit, wherein
the sending unit is configured to: send the feedback information in each of the M time units by using the feedback transmission resource; and repeatedly transmit the SR from an initial time unit in K time units that are determined by the processing unit and that are used to repeatedly transmit the SR, and stop transmitting the SR from an initial time unit in the M time units, wherein K is a pre-configured quantity of retransmissions for repeatedly transmitting the SR, and K is an integer greater than 1, wherein
the initial time unit in the K time units is located before the M time units, and a last time unit in the K time units is in the M time units.

19. The apparatus according to claim 18, wherein the last time unit in the K time units is a time unit in the M time units other than a last time unit in the M time units.

20. The apparatus according to claim 18 or 19, wherein the feedback transmission resource comprises P time units, the P time units comprise the M time units, P is a pre-configured quantity of retransmissions for repeatedly transmitting the feedback information, and P is greater than M.

21. The apparatus according to claim 18 or 19, wherein M is a pre-configured quantity of retransmissions for repeatedly transmitting the feedback information.

22. An information transmission apparatus, applied to a communications system comprising a request transmission resource and a feedback transmission resource, wherein the request transmission resource is used to repeatedly transmit a scheduling request SR, the feedback transmission resource is used to repeatedly transmit feedback information for first downlink data, and the request transmission resource and the feedback transmission resource both comprise M overlapping time units in time domain, wherein M is an integer greater than 1; and the apparatus comprises:
a receiving unit, configured to receive the first downlink data; and
a processing unit and a sending unit, wherein
the sending unit is configured to: in each of the M time units, send the feedback information by using the request transmission resource, or send both the SR and the feedback information by using the feedback transmission resource, wherein
an initial time unit in K time units that are determined by the processing unit and that are used to repeatedly transmit the SR is not later than an initial time unit in the M time units, a last time unit in the K time units is in the M time units, K is a pre-configured quantity of retransmissions for repeatedly transmitting the SR, and K is an integer greater than 1.

23. The apparatus according to claim 22, wherein the last time unit in the K time units is a time unit in the M time units other than a last time unit in the M time units.

24. The apparatus according to claim 22 or 23, wherein the initial time unit in the K time units is the initial time unit in the M time units.

25. The apparatus according to any one of claims 22 to 24, wherein M is a pre-configured quantity of retransmissions for repeatedly transmitting the feedback information.

26. An information transmission apparatus, applied to a communications system comprising a request transmission resource and a feedback transmission resource, wherein the request transmission resource is used to transmit a scheduling request SR or repeatedly transmit a scheduling request SR, the feedback transmission resource is used to repeatedly transmit feedback information for first downlink data, and the feedback transmission resource and the request transmission resource both comprise M overlapping time units in time domain, wherein M is an integer greater than 1; and the apparatus comprises:
a sending unit, configured to send the first downlink data; and
a receiving unit, configured to: in the M time units, detect the feedback information by using the request transmission resource, and
detect the feedback information by using the feedback transmission resource; or in the M time units, detect the feedback information and the SR by using the feedback transmission resource, and detect the feedback information by using the feedback transmission resource.

27. A computer-readable storage medium, wherein the computer-readable storage medium stores a computer program, and when the computer program is run on a computer, the computer is enabled to perform the method according to any one of claims 1 to 13.

28. A chip system, wherein the chip system comprises:
a memory, configured to store an instruction; and
a processor, configured to: invoke the instruction from the memory and run the instruction, so that a communications device in which the chip system is installed performs the method according to any one of claims 1 to 13.
